# EUROPEAN PATENT SPECIFICATION

(11) **EP 4 401 383 B1**
(45) Date of publication and mention of the grant of the patent: **08.07.2026**
(21) Application number: 22882867.9
(22) Date of filing: 18.10.2022
(51) Int. Cl.: H04L 65/60

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 22.10.2021 CN 202111236397
(43) Date of publication of application: 17.07.2024
(73) Proprietor: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN)
(74) Representative: Gill Jennings & Every LLP
(86) International application number: PCT/CN2022/125999
(87) International publication number: WO 2023/066262

(56) References cited:
- EP-A1- 3 886 380
- WO-A1-2019/157963
- CN-A- 111 031 078
- CN-A- 111 800 857
- CN-A- 112 217 812
- CN-A- 113 395 711
- US-A1- 2015 032 845

## Description

### TECHNICAL FIELD

This application relates to the communication field, and in particular, to a communication method and apparatus.

### BACKGROUND

With rapid development of a media streaming service, a higher requirement is imposed on a communication technology, for example, a higher data transmission bandwidth and a lower data transmission delay, to support real-time high-definition playing of the media streaming service. A downlink is used as an example. The media streaming service is usually provided by an application service provider (application service provider, ASP), and a data transmission service is provided by a mobile network operator (mobile network operator, MNO). In other words, the MNO receives data of the media streaming service from the ASP and forwards the data to a terminal device, and then the terminal device plays the data.

In the foregoing process, the MNO adjusts a data transmission policy based only on a requirement of the MNO such as network load and channel quality, and does not consider transmission requirements of different data in a media service stream. As a result, problems such as an excessively small transmission bandwidth and an excessively large transmission delay of some data are caused, and real-time high-definition playing of the media streaming service cannot be supported, which leads to poor user experience.

US2015032845A1 discloses a method and apparatus to generate and process transport packets. A method of processing a transport packet at a receiving entity includes identifying, in response to receiving the transport packet, a payload type based on a field indicating the payload type in a packet header for the transport packet. The method also includes identifying, in response to identifying that the payload type is a streaming mode payload type, a delivery data unit type of DU data in the transport packet based on a field indicating the delivery data unit type in a streaming mode payload header for the DU data. Additionally, the method includes processing the DU data according to the identified delivery data unit type.

EP3886380A1 discloses a route selection policy acquisition method and apparatus, a route selection policy rule execution method and apparatus, and a device and a computer-readable storage medium, belonging to the field of communications. The acquisition method comprises: receiving an application function request from an application function network element; generating a route selection policy rule for a terminal, wherein the route selection policy rule comprises a service specificator, and the service specificator is used for identifying a service type of traffic in an application program; sending an application function response to the application function network element; and providing the route selection policy rule to the terminal, wherein the route selection policy rule is executed when the terminal has traffic matching the service specificator.

### SUMMARY

Embodiments of this application provide a communication method and apparatus, to resolve a problem that real-time high-definition playing of a service stream cannot be supported because transmission requirements of different data in the service stream are not considered, so as to improve user experience.

To achieve the foregoing objective, this application uses the following technical solutions.

According to a first aspect, a communication method according to appended claim 1 is provided.

Based on the communication method provided in the first aspect to the following third aspect, the application function network element indicates based on the first information, a source end device of the service stream, for example, a terminal device or an application server, to add identification information to different types of data in the service stream, so that a network element on a transmission path of the service stream can identify the different types of data, and provide different network transmission policies for the different types of data, thereby providing differentiated data transmission services for the different types of data in the service stream, to ensure overall playing effect of the service stream. For example, real-time high-definition playing of the service stream is implemented in a scenario with sufficient network resources, good channel quality, and the like, and real-time smooth playing of the service stream is ensured in a scenario with limited network resources, poor channel quality, and the like, so that user experience is improved.

The type of the data packet in the service stream includes one or more of the following: a foreground stream or a background stream. Alternatively, the type of the data packet in the service stream includes one or more of the following: an intra-coded frame (intra-coded frame, I frame for short), a predicted frame (predicted frame, P frame for short), or a bi-directional predicted frame (bi-directional predicted frame, B frame for short). Alternatively, the type of the data packet in the service stream includes one or more of the following: an enhancement layer or a base layer. Different types of data have different requirements for network transmission, and specific types include but are not limited to the foregoing several types.

The second information includes the identification information, and one piece of identification information identifies a data type of a data packet. For example, identification information of the foreground stream may be an identifier 1, and identification information of the background stream may be an identifier 2. Optionally, the identification information may further indicate a location at which the specific identifier is added. For example, the identifier 1 of the foreground stream needs to be added to an IP header field or a UDP/TCP header field.

Specifically, the application function network element may obtain the first information from an application service provider in real time, or may read the first information from local storage space of the application function network element. The first information locally stored in the application function network element may be pre-stored through an input/output interface, or may be received and stored in advance through an interface between the application function network element and the application service provider. An obtaining manner of the first information is not specifically limited in this embodiment of this application.

Further, content of the second information may be the same as or different from content of the first information. Optionally, when the content of the second information and the content of the first information are the same, it may be understood that the application service provider has allocated corresponding identification information to different types of data in the service stream, and the application function network element only needs to send the identification information specified by the application service provider to a source end device of the service stream, for example, a terminal device or an application server.

Alternatively, when the content of the second information is different from the content of the first information, it may be understood that the application service provider only notifies the application function network element that identification information needs to be added to which type of data of which service or identification information needs to be added to which type of data of the service, and a specific value and/or a carrying location of the identification information that needs to be added to each type of data of the service may be allocated by the application function network element. For example, if the first information obtained by the application function network element includes a service identifier of a service corresponding to the service stream and type information of each type of data in the service stream, the application function network element may determine, based on the type information, a specific value of identification information that needs to be added to each type of data in the service stream and a carrying location of the identification information. Optionally, if the application service provider provides only one service, the application service provider does not need to provide an additional service identifier to represent a service type of the service. Therefore, optionally, the method according to the first aspect further includes: determining the second information based on the first information. The first information may be provided by the application service provider. In other words, the content of the second information may be allocated by the application function network element based on the first information, so that the application function network element has freedom and flexibility in a process of determining to add identification information to various types of data in the service stream. This can avoid a problem that when different application service providers determine the content of the second information, a plurality of types of data in different service streams may correspond to a same piece of identification information, and can effectively avoid an identification information conflict. In this way, differentiated data transmission policies are provided for different types of data in the service stream, to ensure quality of the service stream.

Further, after allocating identification information to each type of data in the service stream, the application function network element may report the allocated identification information and address information of the application server to the application service provider, where the address information is used by the application service provider to inject content of the service stream into the application server, and the identification information is used by the application service provider to adjust a data amount of the content of the service stream that is injected into the application server.

After obtaining or determining the second information, the application function network element further sends the second information to the source end device, for example, the application server or the terminal device. Optionally, the sending second information includes one or more of the following: sending the second information to an application server; or sending the second information to a terminal device. For a downlink service stream, the application server is a source end device, and the terminal device is a sink end device; and for an uplink service stream, the terminal device is a source end device, and the application server is a sink end device.

Then, the application function network element may initiate, based on a data transmission rate, a transmission delay, a bit error rate, a data transmission periodicity, a data amount, and the like, a policy adjustment request to a policy control network element, for example, a policy control function (policy control function, PCF) network element in a core network. By using the policy adjustment request, the second information including the identification information may be sent to the policy control network element, to adjust a transmission policy of each type of data in the service stream, for example, increasing/decreasing a transmission resource, or increasing/decreasing a transmission delay.

According to a second aspect, a communication method as set out in appended claim 5 is provided.

The second information includes the identification information.

The type of the data packet in the service stream includes one or more of the following: a foreground stream or a background stream; or the type of the data packet in the service stream includes one or more of the following: an I frame, a P frame, or a B frame; or the type of the data packet in the service stream includes one or more of the following: an enhancement layer or a base layer.

In a possible design, the first device includes a terminal device. Correspondingly, the method according to the second aspect further includes: sending network requirement information to the application function network element, where the network requirement information is used to determine a network transmission capability required by a data packet of a first type in the data packet in the service stream, and the network transmission capability includes one or more of the following: a transmission bandwidth or a transmission delay.

According to a third aspect, a communication apparatus as set out in appended claim 8 is provided.

According to a fourth aspect, a computer-readable storage medium as set out in appended claim 9 is provided.

According to a fifth aspect, a computer program product as set out in appended claim 10 is provided.

### BRIEF DESCRIPTION OF DRAWINGS

FIG. 1 is a schematic diagram 1 of an architecture of a communication system according to an embodiment of this application;
FIG. 2 is a schematic diagram 2 of an architecture of a communication system according to an embodiment of this application;
FIG. 3 is a schematic diagram 3 of an architecture of a communication system according to an embodiment of this application;
FIG. 4 is a schematic diagram of an architecture of a 5G system based on a service-oriented interface according to an embodiment of this application;
FIG. 5 is a schematic diagram 4 of an architecture of a communication system according to an embodiment of this application;
FIG. 6 is a schematic diagram of a protocol architecture of a communication system according to an embodiment of this application;
FIG. 7 is a schematic flowchart 1 of a communication method according to an embodiment of this application;
FIG. 8A to FIG. 8C are a schematic flowchart 2 of a communication method according to an embodiment of this application;
FIG. 9A to FIG. 9C are a schematic flowchart 3 of a communication method according to an embodiment of this application;
FIG. 10 is a schematic flowchart 4 of a communication method according to an embodiment of this application;
FIG. 11A to FIG. 11C are a schematic flowchart 5 of a communication method according to an embodiment of this application;
FIG. 12 is a schematic flowchart 6 of a communication method according to an embodiment of this application;
FIG. 13 is a schematic diagram 1 of a structure of a communication apparatus according to an embodiment of this application;
FIG. 14 is a schematic diagram 2 of a structure of a communication apparatus according to an embodiment of this application;
FIG. 15 is a schematic diagram 3 of a structure of a communication apparatus according to an embodiment of this application;
FIG. 16 is a schematic diagram 4 of a structure of a communication apparatus according to an embodiment of this application; and
FIG. 17 is a schematic diagram 5 of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, 4th generation (4th generation, 4G) mobile communication systems such as a long term evolution (long term evolution, LTE) system, a worldwide interoperability for microwave access (worldwide interoperability for microwave access, WiMAX) communication system, 5th generation (5th generation, 5G) mobile communication systems such as a new radio (new radio, NR) system, and future communication systems such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)" and "corresponding (corresponding and relevant)" may be interchangeably used sometimes. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

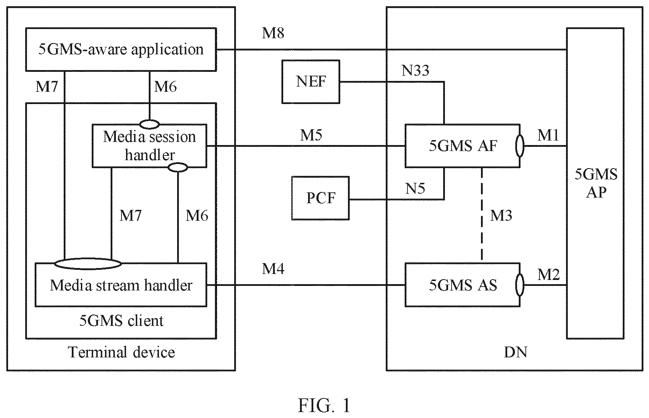

For ease of understanding embodiments of this application, a communication system shown in FIG. 1 is first used as an example to describe in detail a communication system applicable to embodiments of this application. For example, FIG. 1 is a schematic diagram 1 of an architecture of a communication system according to an embodiment of this application.

FIG. 1 is a 5G media streaming architecture for a 5G media streaming (5G media streaming, 5GMS) service.

As shown in FIG. 1, the 5GMS architecture includes but is not limited to one or more of the following: a terminal device, a 5GMS application function (5GMS application function, 5GMS AF), a 5GMS application provider (5GMS application provider, 5GMS AP), and a 5GMS application server (5GMS application server, 5GMS AS).

It should be noted that the 5GMS application function may also be referred to as a 5GMS application function network element, a 5GMS application function entity, or the like. The 5GMS application provider may also be referred to as a 5GMS application service provider (5GMS application service provider, 5GMS ASP), a 5GMS application service providing entity, a 5GMS application service providing network element, or the like. The 5GMS application server may also be referred to as a 5GMS application service entity, a 5GMS application service network element, or the like. Names of the foregoing network side functions are not limited in this embodiment of this application. For ease of description, the following uses a 5GMS application function, a 5GMS application service provider, and a 5GMS application server as an example for description.

The 5GMS application function, the 5GMS application service provider, and the 5GMS application server may be deployed in a data network (data network, DN). The data network is an operator network or a third-party network that provides a data transmission service for the terminal device. For example, the DN may include but is not limited to one or more of the following: a 5GMS AF network element, a 5GMS AS network element, and a 5GMS AP.

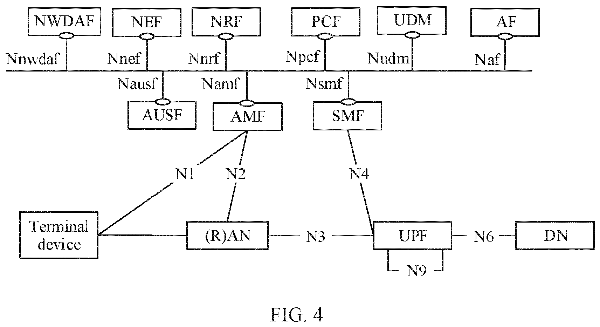

Optionally, the 5GMS architecture may further include but is not limited to a network exposure function (network exposure function, NEF), a policy control function (policy control function, PCF), or the like. For specific implementation, refer to an existing solution, for example, the following 5G architecture shown in FIG. 4. Details are not described herein again.

The terminal device may include a 5GMS-aware application (5GMS-aware application) and a 5GMS client (5GMS client). The 5GMS-aware application may be considered as an application on a terminal device side. The 5GMS-aware application may be referred to as a 5GMS application entity, an application entity, a 5GMS App, a 5GMS application module, or the like. The 5GMS client may be referred to as a 5GMS terminal, a 5GMS terminal entity, a 5GMS client entity, a 5GMS client module, or the like. The 5GMS client entity may include a media session handler (media session handler, MSH) entity and a media stream handler (media stream handler) entity. Optionally, for a media downstream service, the media stream handler entity may also be referred to as a media player (media player, MP), and for a media upstream service, the media stream handler entity may also be referred to as a media streamer (media streamer, MS). For ease of description, the following uses the 5GMS-aware application, the 5GMS client, the media session handler, and the media stream handler as examples for description.

The 5GMS-aware application and the media stream handler may communicate through an application programming interface (application programming interface, API) (for example, an M7 interface), the media stream handler and the media session handler may communicate through an application programming interface (for example, an M7 interface and an M6 interface), and the media session handler and the 5GMS-aware application may communicate through an application programming interface (for example, an M6 interface).

The media session handler and the 5GMS AF may interact with each other through an application programming interface (for example, an M5 interface), so as to implement creation, control, and transmission of a media session.

The media stream handler and the 5GMS AS may transmit, encode, decode, and play media streams (for downlink services) through an application programming interface (for example, an M4 interface), and provide application programming interfaces (for example, an M6 interface and an M7 interface) for an upper-layer 5GMS-aware application and media session handler, so as to implement media stream playing and media stream session control.

An NEF network element and a PCF network element are network elements in a 5G architecture (as shown in FIG. 4). The 5GMS AF network element may interact with a 5G network through an application programming interface (for example, an N33 interface or an N5 interface). For another network element or device in the 5G architecture shown in FIG. 4, refer to an existing implementation. Details are not described again in this embodiment of this application.

The 5GMS application service provider is mainly a content providing server of the 5GMS-aware application of the terminal device. The 5GMS application service provider and the 5GMS-aware application may be deployed by an application service provider. The 5GMS application service provider and the 5GMS-aware application may communicate with the terminal device through an application programming interface (for example, an M8 interface).

The 5GMS AF and the 5GMS AS may communicate with each other through an application programming interface (for example, an M3 interface). When the 5GMS AF and the 5GMS AS are in an external untrusted zone, the application programming interface depends on a third-party provider. The 5GMS AF is also a type of AF defined by 3GPP, and is intended to implement information exchange between a 5GMS application service provider and a 3GPP network, for example, capability exposure or parameter provision. The 5GMS AF is an AF dedicated for the media streaming service. The 5GMS AS can be deployed and controlled by a mobile network operator (mobile network operator, MNO) or an external third-party application service provider. As a media stream application server, the 5GMS AS functions as a content delivery network (content delivery network, CDN) server.

The terminal device in embodiments of this application may be a terminal having a wireless transceiver function, or a chip or a chip system that may be disposed in the terminal. The terminal device may also be referred to as user equipment (user equipment, UE), a user apparatus, an access terminal, a subscriber unit, a subscriber station, a mobile station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be a mobile phone (mobile phone), a wireless data card, a personal digital assistant (personal digital assistant, PDA) computer, a laptop computer (laptop computer), a tablet computer (Pad), a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a gamer, a smart television, a smart speaker, a smart refrigerator, or fitness equipment) in a smart home (smart home), an in-vehicle terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted component, a vehicle-mounted part, a vehicle-mounted chip, or a vehicle-mounted unit that is built in a vehicle as one or more parts or units. The vehicle may implement the method provided in this application through the vehicle-mounted module, the vehicle-mounted component, the vehicle-mounted part, the vehicle-mounted chip, or the vehicle-mounted unit that is built in the vehicle.

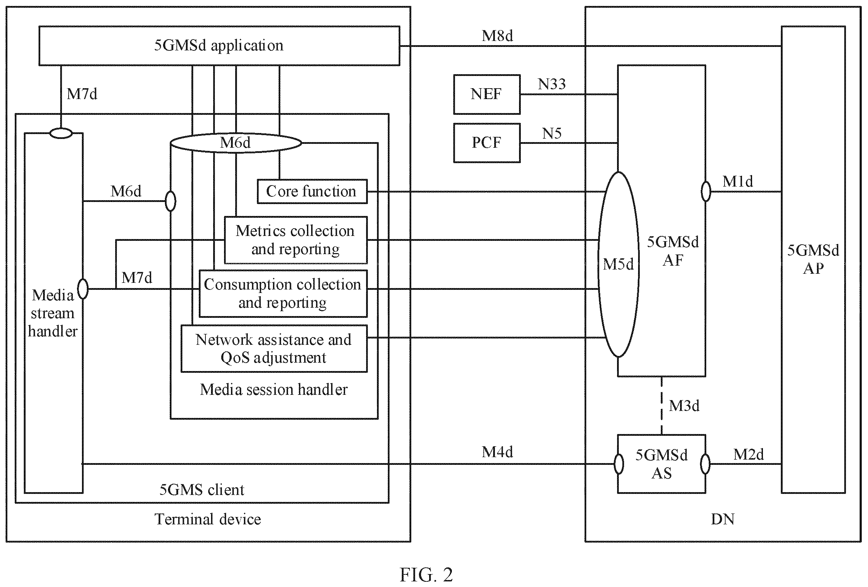

FIG. 2 is a schematic diagram 2 of an architecture of a communication system according to an embodiment of this application. FIG. 2 is a 5G media stream architecture oriented to a media downstream service, and may be applied to a scenario in which a terminal device selects a media stream for playing in a live broadcast or on-demand manner.

As shown in FIG. 2, a 5GMS client on a terminal device side includes a media session handler and a media stream handler. For example, the media session handler may support but is not limited to functions of one or more of the following sub-modules: a core function (core function) sub-module, a metrics collection and reporting (metrics collection and reporting) sub-module, a consumption collection and reporting (consumption collection and reporting) sub-module, or a network assistance (network assistance) and quality of service (quality of service, QoS) adjustment sub-module.

The core function sub-module may implement core functions of establishing, managing, and controlling a media stream session. The metrics collection and reporting sub-module may perform metrics collection and reporting configuration on the terminal device side, thereby implementing metrics collection and reporting on the terminal device side. The consumption collection and reporting sub-module may collect and configure consumption information of a media streaming service on the terminal device side, and report the consumption information to the 5GMS AF side based on configuration information. The network assistance and QoS adjustment sub-module may interact with a network by using the 5GMS AF, or directly interact with a (radio) access network ((radio) access network, (R)AN), to request corresponding policy adjustment (for example, QoS adjustment) and network assistance from a network side.

For example, the media stream handler may serve as a media access terminal device, for example, a dynamic adaptive streaming over hypertext transfer protocol (dynamic adaptive streaming over hypertext transfer protocol, DASH) terminal device, and may support but is not limited to functions of one or more of the following sub-modules: a media data decryption sub-module, a consumption policy and log recording sub-module, a digital rights management (digital rights management, DRM) client sub-module, a media data decoding sub-module, or a media display and rendering sub-module.

For example, a 5GMS application service provider may create a service provisioning (service provisioning) session, and send a related feature, for example, a metrics collection and reporting feature, to the 5GMS AF. The 5GMS AF determines service access information (service access information, SAI) based on feature information sent by the 5GMS application service provider, and returns the SAI or index information of the SAI to the 5GMS application service provider. When the terminal device starts a media streaming service, the terminal device obtains the SAI through an M8 or M5 interface, and performs configuration and execution based on the feature in the SAI. For example, the 5GMS terminal device configures the feature based on a corresponding sub-function in the obtained SAI.

The metrics collection feature is used as an example. After obtaining the SAI, the 5GMS client configures the media stream handler to collect metrics based on configuration information in the SAI to obtain metrics collection information, configures the media stream handler to send the metrics collection information to the media session handler based on a reporting period in a configuration, and the media session handler sends the metrics collection information to the 5GMS AF through the M5 interface, so as to complete metrics collection on the terminal device side.

It should be noted that a 5GMS network element in this embodiment of this application may be a 5GMSd (5G media streaming download, 5GMSd) network element for the media downstream service.

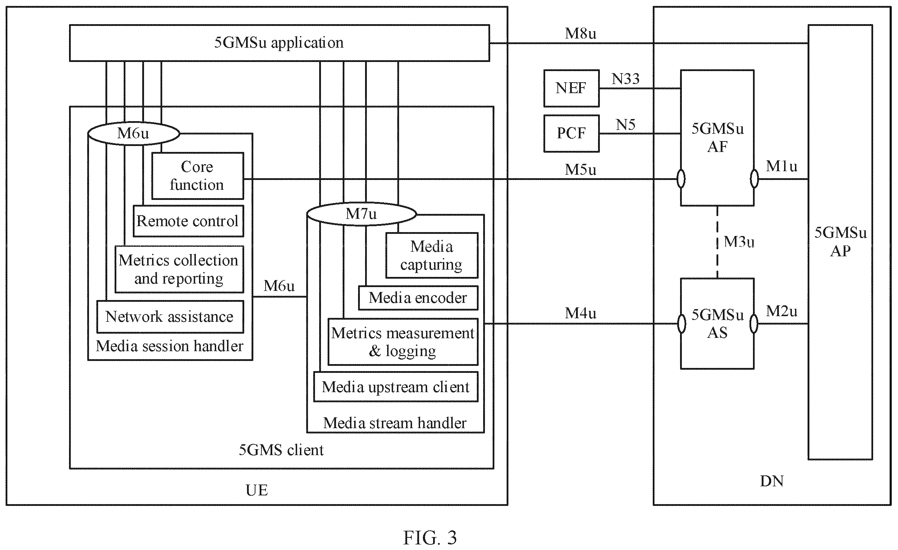

FIG. 3 is a schematic diagram 3 of an architecture of a communication system according to an embodiment of this application. FIG. 3 is a 5G media stream architecture oriented to a media upstream service, and may be applied to a scenario in which a terminal device uploads a media streaming service to an application server, or shares a media streaming service with another terminal device by using a 5GMS network.

Refer to FIG. 2. As shown in FIG. 3, a 5GMS client on a terminal device side includes a media session handler and a media stream handler. For example, the media session handler may support but is not limited to functions of one or more of the following sub-modules: a core function sub-module, a remote control (remote control) sub-module, a metrics collection and reporting (metrics collection and reporting) sub-module, or a network assistance (network assistance) sub-module.

The remote control function applies only to an uplink service. That is, the media session handler on the terminal device side is remotely controlled by a remote 5GMSu AF. For related content of other sub-modules in the media session handler, refer to related content in FIG. 2. Details are not described herein again.

In addition, the media stream handler may support, but is not limited to, functions of one or more of the following sub-modules: a media capturing (media capturing) sub-module, a media encoder(s) (media encoder(s)) sub-module, a metrics measurement & logging (metric measurement & logging) sub-module, or a media upstream client (media upstream client) sub-module.

The media capturing sub-module may implement a core function of capturing an audio and a video, to generate a media stream.

For example, a 5GMS application service provider may create a service provisioning (service provisioning) session, and send a related feature, for example, a metrics collection and reporting feature, to the 5GMS AF. The 5GMS AF determines service access information (service access information, SAI) based on feature information sent by the 5GMS application service provider, and returns the SAI or index information of the SAI to the 5GMS application service provider. When the terminal device starts a media streaming service, the terminal device obtains the SAI through an M8 or M5 interface, and performs configuration and execution based on the feature in the SAI. For example, the 5GMS terminal device configures the feature based on a corresponding sub-function in the obtained SAI.

The metrics measurement & logging feature is used as an example. After obtaining the SAI, the 5GMS client configures the media stream handler to measure metrics based on configuration information in the SAI to obtain metrics measurement information, such as quality of experience information (quality of experience, QoE) of a media service, and configures the media stream handler to send the metrics measurement information to the media session handler based on a reporting period in a configuration. The media session handler sends the metrics measurement information to the 5GMS AF through the M5 interface, so as to complete metrics measurement and reporting on the terminal device side.

It should be noted that the 5GMS network element in this embodiment of this application may be a 5GMSu (5G media streaming upload, 5GMSu) network element for a media upstream service.

A person skilled in the art should understand that the media downstream service shown in FIG. 2 and the media upstream service shown in FIG. 3 may alternatively occur at the same time, for example, an online high-definition game and a remote high-definition video call. In this scenario, the 5GMSd network element shown in FIG. 2 and the 5GMSu network element shown in FIG. 3 may also be collectively referred to as the 5GMS network element shown in FIG. 1, and a downlink interface shown in FIG. 2 and an uplink interface shown in FIG. 3 may also be collectively referred to as a 5GMS interface. For example, the 5GMSd AF and the 5GMSu AF may also be collectively referred to as the 5GMS AF shown in FIG. 1, and an M5d interface and an M5u interface may be collectively referred to as the M5 interface.

In addition, the network elements that perform different functions shown in FIG. 1 to FIG. 3 may be independently deployed, or may be deployed together. This is not specifically limited in embodiments of this application. For example, the 5GMS AF and the 5GMS AS may be two independent devices, or may be integrated into one device. When the 5GMS AF and the 5GMS AS are integrated into one device, the M3 interface shown in FIG. 1 to FIG. 3 is an internal interface of the device.

FIG. 4 is a schematic diagram of an architecture of a 5G system based on a service-oriented interface according to an embodiment of this application. As shown in FIG. 4, the 5G system may include an authentication server function (authentication server function, AUSF) network element, an access and mobility management function (access and mobility management function, AMF) network element, a data network (data network, DN), a unified data management (unified data management, UDM) network element, a PCF network element, a (radio) access network ((radio) access network, (R)AN) network element, a user plane function (user plane function, UPF) network element, user equipment (user equipment, UE) (which may also be referred to as a terminal device), an application function (application function, AF) network element, a session management function (session management function, SMF) network element, a network data analysis function (network data analytics function, NWDAF) network element, an NEF network element, and a network repository function (network repository function, NRF) network element.

For ease of description, the (R)AN network element, the AMF network element, the SMF network element, the UDM network element, the UPF network element, the PCF network element, and the like are respectively represented by using RAN, AMF, SMF, UDM, UPF, PCF, and the like in the following.

The 5G system includes an access network and a core network. The access network is configured to implement functions related to radio access, and mainly includes the RAN. The core network is configured to control network services, deliver data, and so on. The core network includes a plurality of network elements, mainly including: the AMF, the SMF, the UPF, the PCF, the UDM, and the like.

Functions of some network elements in FIG. 4 are as follows.

The AMF is mainly responsible for signaling processing, for example, user registration management, reachability detection, SMF selection, and mobility status conversion management.

The SMF is mainly responsible for all control plane functions of terminal session management, including control session establishment, modification, and deletion, user plane node selection, and the like.

The UPF serves as an anchor point for a protocol data unit (protocol data unit, PDU) session connection. The UPF is responsible for data packet routing and forwarding, provides support in routing a service to a data network as a mobility anchor or an uplink classifier, may further support a multi-homed PDU session as a branch point, and the like.

The PCF may be used as a policy decision point, and is responsible for providing rules such as a service data flow and application-based detection rule, a gating control rule, and a QoS rule, and a flow-based charging control rule.

The UDM may be configured to store subscription data of a user.

The AUSF may provide an authentication service.

The AF may be co-deployed with an application server, and may belong to an operator or a third party. The AF mainly supports interaction with a 3GPP core network to provide a service, to affect a data routing decision, policy control, access network capability exposure, and the like.

The NEF securely opens a service and a capability provided by a 3GPP network function, for example, a third party, edge computing, and an AF.

The NRF is a network element that stores information such as a network element attribute, a network element status, and a network topology relationship, and has a network element discovery function and a network element management function.

The DN may be responsible for providing a carrier service, Internet access, or a third-party service.

The NWDAF has at least one of the following functions: a data collection function and a data analysis function. For example, the NWDAF may provide network data collection and analysis functions based on technologies such as big data and artificial intelligence.

The RAN is a network including one or more access network devices (which may also be referred to as RAN nodes or network devices), and implements functions such as a radio physical layer function, resource scheduling and radio resource management, a radio access control and mobility management function, quality of service management, and data compression and encryption. The access network device is connected to the UPF through a user plane interface N3, and is configured to deliver data of a terminal. The access network device establishes a control plane signaling connection to the AMF through a control plane interface N2, to implement a function like radio access bearer control.

The access network device is a device having a wireless transceiver function or a chip or a chip system that may be disposed in the device. The access network device includes but is not limited to an access point (access point, AP), for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, or a transmission point (transmission and reception point, TRP, or transmission point, TP) in a wireless fidelity (wireless fidelity, Wi-Fi) system; or may be a gNB or a transmission point (TRP or TP) in a 5G system, for example, a new radio (new radio, NR) system, one or a group of antenna panels (including a plurality of antenna panels) of a base station in a 5G system, or may be a network node constituting a gNB or a transmission point, for example, a baseband unit (BBU), a distributed unit (distributed unit, DU), or a road side unit (road side unit, RSU) having a base station function.

It may be understood that, in addition to the function network elements shown in FIG. 4, the network architecture of the 5G network may further include another function network element, for example, a unified data storage (unified data repository, UDR) network element and an unstructured data storage (unstructured data storage function, UDSF) network element.

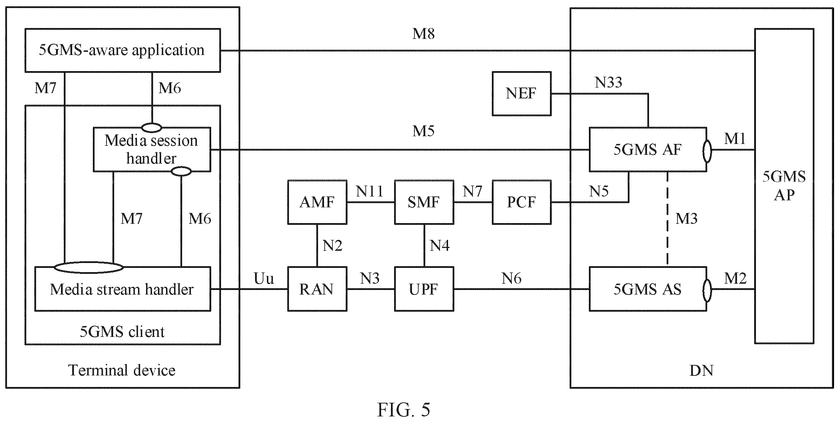

FIG. 5 is a schematic diagram 4 of an architecture of a communication system according to an embodiment of this application. FIG. 4 is an example of combining the 5GMS architecture shown in FIG. 1 and the 5G network architecture shown in FIG. 4. The DN (the 5GMS AP, the 5GMS AF, and the 5GMS AS) may be provided by a third party, and a data transmission service is provided by a 5G network deployed by an MNO. Specifically, a function of the M4 interface shown in FIG. 1 may be implemented by the (R)AN, the user plane function (user plane function, UPF) network element, a Uu interface between the UE and the (R)AN, an N3 interface between the (R)AN and the UPF network element, and an N6 interface between the UPF network element and the DN in the 5G network.

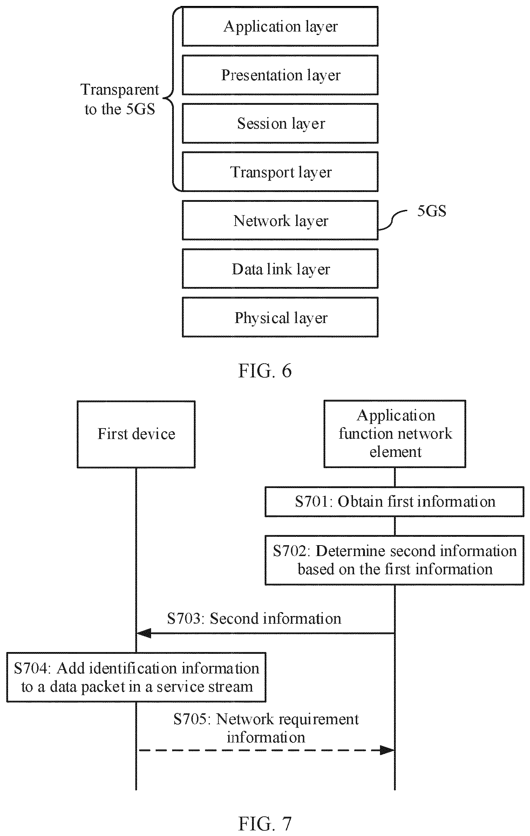

The following provides description with reference to a network protocol layer architecture shown in FIG. 6. An M4 interface is used as an example. The M4 interface is located at an application (application) layer shown in FIG. 6, and a device or a network element, for example, a terminal device, an (R)AN, and a UPF network element in a 5G system (5G system, 5GS) is located at a network (network) layer shown in FIG. 6. The application layer is located at an upper layer of the network layer, and there are a presentation (presentation) layer, a session (session) layer, and a transport (transport) layer between the application layer and the network layer. The application layer, the presentation layer, the session layer, and the transport layer are transparent (transparent) to the 5GS. In other words, the 5GS cannot learn detailed information in the application layer, for example, a type of data included in a 5GMS media stream. In other words, in an existing solution, a data transmission policy of a 5GMS media stream, for example, a policy control & charging (policy control & charging, PCC) rule and a QoS control policy, is usually determined by an MNO based on a requirement of the MNO, for example, network load, channel quality, and a user capacity, and transmission requirements of different data in the 5GMS media stream are not considered. As a result, problems such as an excessively small transmission bandwidth and an excessively large transmission delay of some data are caused, and real-time high-definition playing of the media streaming service cannot be supported, which leads to poor user experience.

However, in this application, an application function network element may indicate, based on first information (which may be provided by an ASP), a source end device of a service stream, for example, a terminal device or an application server, to add identification information to different types of data in the service stream provided by the application service provider, thereby providing an effective technical means for the 5GS to identify and provide differentiated policies for the different types of data in the service stream. Then, the application function network element may send service stream description information including the identification information to a policy control network element in a core network, so that the policy control network element may identify, based on the service stream description information including the identification information, different data types in the service stream, and dynamically adjust a data transmission policy of each type of data in the service stream, thereby providing differentiated data transmission services for the different types of data in the service stream, so as to ensure overall playing effect of the service stream, and improve user experience. For example, real-time high-definition playing of the service stream may be implemented in a scenario with sufficient network resources, good channel quality, and the like, and real-time smooth playing of the service stream may be ensured in a scenario with a limited network resource, poor channel quality, and the like.

It should be noted that the communication method provided in embodiments of this application is applicable to execution between any two nodes of the terminal device, the 5GMS AF, the 5GMS AS, and the 5GMS AP shown in any one of FIG. 1 to FIG. 3 and FIG. 5. For specific implementation, refer to the following method embodiments. Details are not described herein again.

The following specifically describes the communication method provided in embodiments of this application with reference to FIG. 7 to FIG. 11A to FIG. 11C.

For example, FIG. 7 is a schematic flowchart 1 of a communication method according to an embodiment of this application. The communication method is applicable to the communication system shown in any one of FIG. 1 to FIG. 3 and FIG. 5. The communication system shown in FIG. 1 is used as an example. An application service provider in FIG. 7 may be the 5GMS AP shown in FIG. 1, an application function network element in FIG. 7 may be the 5GMS AF shown in FIG. 1, and a first device shown in FIG. 7 may be the terminal device or the 5GMS AS shown in FIG. 1.

As shown in FIG. 7, the communication method includes the following steps.

S701: An application function network element obtains first information.

For example, a manner in which the application function network element obtains the first information may include: The application function network element receives the first information from an application service provider, and correspondingly, the application service provider sends the first information to the application function network element; or the application function network element obtains the first information locally. The first information locally stored in the application function network element may be input through an input/output interface, or may be received and stored in advance through an interface between the application function network element and the application service provider, or may be preconfigured. A source of the first information is not specifically limited in this embodiment of this application.

The first information indicates a type of a data packet in a service stream.

In one embodiment, according to classification standards of different data in service streams provided by different application service providers, the type of the data packet in the service stream includes one or more of the following: a foreground stream or a background stream. Specifically, in a service like VR or AR, a service layer considers using an encoding manner of a field of view area, that is, media in a current field of view range to which a user is oriented is used as a foreground stream for independent encoding and transmission, and media in another area or complete three-dimensional space is independently encoded as a background stream for transmission. For example, an image in the current field of view range of the user is encoded as ultra-high-definition image quality for transmission, and images in another field of view range or all field of view ranges are encoded as low-definition image quality for transmission, thereby avoiding pressure caused by panoramic ultra-high-definition media transmission to a network.

Alternatively, in another embodiment, the type of the data packet in the service stream includes one or more of the following: an intra-coded frame (intra-coded frame, I frame), a predicted frame (predicted frame, P frame), or a bi-directional predicted frame (bi-directional predicted frame, B frame). Specifically, the I-frame, as an intra-coded frame, may be independently decoded and displayed based on data of a current frame. After receiving the I-frame, the terminal device may decode the I-frame, and other frames can be decoded only with reference to the I-frame. For example, the P-frame needs to be decoded and displayed with reference to a decoding result of another frame (for example, a previous frame) before the P-frame, and the B-frame needs to be decoded with reference to at least one frame (for example, a previous frame + a next frame) before and after the B-frame, which means that the B-frame is more dependent on other frames. In other words, neither the P-frame nor the B-frame can be decoded independently, and decoding can be performed only by referring to a decoding result of another frame.

Alternatively, in yet another embodiment, the type of the data packet in the service stream includes one or more of the following: a base layer or an enhancement layer. Specifically, if a hierarchical coding mechanism, for example, a scalable video coding (scalable video coding, SVC) scheme, is used in a media coding process, a coded media stream is divided into a base layer and one or more enhancement layers, where a media stream at the base layer may be decoded and displayed independently, and a media stream at the enhancement layer cannot be decoded and displayed independently, and has to be decoded and displayed with reference to the media stream at the base layer. It should be understood that another classification standard may be used for a classification method of different data in the service stream. This is not specifically limited in this embodiment of this application.

Optionally, the first information may include one or more of the following: a service identifier of a service, and type information of one or more data types in the service stream of the service. The service identifier of the service refers to service stream description information used to determine the service, for example, IP quintuple information, or one or more pieces of characteristic information in an IP layer, a transport layer, and an application layer.

For example, a service stream 1 of a service 1 provided by an application service provider 1 includes two data types: a foreground stream and a background stream. The first information may include one or more of the following: a service identifier 1 of the service 1, type information of the foreground stream, or type information of the background stream. For example, the type information of the data in the service stream may be allocated by the application function network element or the application service provider. The following provides specific descriptions with reference to solution 1 and solution 2.

Solution 1: The first information includes the service identifier 1 of the service 1 and data type information. However, a specific implementation solution like a specific value of identification information of data of a type corresponding to the data type information in a network transmission process, and a carrying location of the identification information may be determined by the application function network element. The specific value of the identification information may be a character string or a value, and the carrying location of the identification information is a name of an information element (information element, IE) or a field (field) that is in encapsulation information of a data packet and that is used to carry the identification information. For example, the first information includes the service identifier 1 and the type information of the foreground stream. In this case, a specific value and a carrying location of the identification information of the foreground stream may be determined by the application function network element, so as to give the application function network element greater freedom and flexibility. This can avoid a problem that when different application service providers allocate identifiers of various types of data to service streams provided by the application service providers, values of identifiers of different types of data packets belonging to different service streams may be the same, thereby effectively avoiding an identification information conflict. Optionally, when the application service provider provides only one service, the application service provider may not provide a service identifier of the service. Details are not described in other parts of this specification.

The service stream 1 of the service 1 and a service stream 2 of a service 2 are used as an example for description. The service 2 is provided by an application service provider 2, and the service stream 2 includes an I frame and a P frame. Assuming that identifiers allocated by the application service provider 1 to the foreground stream and the background stream in the service stream 1 are sequentially an identifier 1 and an identifier 2, and identifiers allocated by the application service provider 2 to the I frame and the P frame in the service stream 2 are sequentially an identifier 3 and an identifier 4, a value of one of the identifier 1 and the identifier 2 may be the same as that of the identifier 3 and the identifier 4, for example, the identifier 1 is the same as the identifier 3. As a result, a problem of a conflict between identification information of different types of data is caused.

Solution 2: In addition to the service identifier and the data type information, the first information may further include one or more of the following: a value or a carrying location of identification information corresponding to the data type information. In this case, it may be understood that the application service provider indicates the application function network element to add identification information to data of which type in a service stream of which service, and further specifies a value and/or a carrying location of the identification information.

A difference between solution 2 and solution 1 lies in that in solution 2, the values and the carrying locations of the identification information of the foreground stream and the background stream are allocated by the application function network element, while in solution 1, the values and the carrying locations of the identification information of the foreground stream and the background stream are allocated by the application service provider.

Optionally, the first information may further include cross-layer optimization indication information, and the indication information indicates the application function network element to perform an identifier processing operation on the service stream.

In this embodiment of this application, an explicit manner may be used to indicate to perform an identification addition operation on a data packet of which data type in a service stream of which service, for example, a solution in which the first information includes the cross-layer optimization indication information; or an implicit manner may be used to indicate to perform an identification addition operation on a data packet of which data type in a service stream of which service, for example, a solution in which the first information includes data type information of some or all data types in a service stream of a service, and does not include the cross-layer optimization indication information. This is not limited in this embodiment of this application. In other words, for the implicit indication solution, provided that the first information includes the service identifier and the data type information, it is considered by default that the identification information needs to be added to the data packet of the specified data type in the service stream of the service corresponding to the service identifier. A specific solution may be determined by the application function network element based on an actual requirement.

Refer to FIG. 1. The application service provider and the application function network element may transmit the first information through an M1 interface.

Optionally, before S701 is performed, the method shown in FIG. 7 further includes: The application service provider determines the first information. For example, the application service provider may select a service from all services provided by the application service provider, where an identifier addition operation needs to be performed on a service stream of the service; and select a data packet of a data type on which identifier addition operation needs to be performed, so as to generate content of the first information.

Optionally, before S701 is performed, the method shown in FIG. 7 further includes: The application service provider and the mobile network operator may reach an agreement on performing an identifier addition operation on data of which data type in a service stream of which service. Specifically, an online manner or an offline manner may be used for execution, and a reached conclusion, for example, a service level agreement (service level agreement, SLA) agreement, is stored in a local storage of the application service provider or the application function network element in a manner of a computer-readable file or configuration information for backup. Content of the SLA agreement includes a part or all of the content of the first information.

S702: The application function network element determines second information based on the first information.

The second information indicates to add the identification information to the data packet in the service stream, and the identification information indicates the type of the data packet in the service stream.

Specifically, the second information includes the identification information, and one piece of identification information identifies a data type of a data packet. For example, the identification information of the foreground stream may be the identifier 1, and the identification information of the background stream may be the identifier 2.

In addition, the second information may further include a carrying location of the identification information. For example, the identification information may be added to a header field in a protocol layer like an internet protocol version 4 (internet protocol version 4, IPv4), an internet protocol version 6 (internet protocol version 6, IPv6), a transmission control protocol (transmission control protocol, TCP), or a user datagram protocol (user datagram protocol, UDP).

Further, content of the second information may be the same as or different from the content of the first information. Optionally, when the content of the second information and the content of the first information are the same, it may be understood that the application service provider has allocated corresponding identification information to different types of data in the service stream, and the application function network element only needs to send the identification information specified by the application service provider to a source end device of the service stream, for example, a terminal device or an application server.

Alternatively, when the content of the second information is different from the content of the first information, it may be understood that the application service provider only notifies the application function network element that identification information needs to be added to which type of data in a service stream of which service, and a value and/or a carrying location of identification information that needs to be added to each type of data may be allocated by the application function network element. In other words, the first information may be provided by the application service provider, and the content of the second information may be allocated by the application function network element based on the first information, so that the application function network element has freedom and flexibility in a process of determining to add identification information to various types of data in the service stream, thereby avoiding a problem that when different application service providers determine the content of the second information, a plurality of types of data in different service streams may correspond to a same piece of identification information. In this way, an identification information conflict is effectively avoided, and quality of the service stream is ensured.

Further, after allocating identification information to various types of data in the service stream, the application function network element may report address information of the application server to the application service provider, for example, an IP address of the application server. The address information is used by the application service provider to inject content of a downlink service stream into the application server, or is used to receive content of an uplink service stream from the terminal device. Optionally, the application function network element may report the allocated identification information to the application provider, and the application provider sends the identification information to the terminal device, so as to implement identification information addition in the uplink service stream.

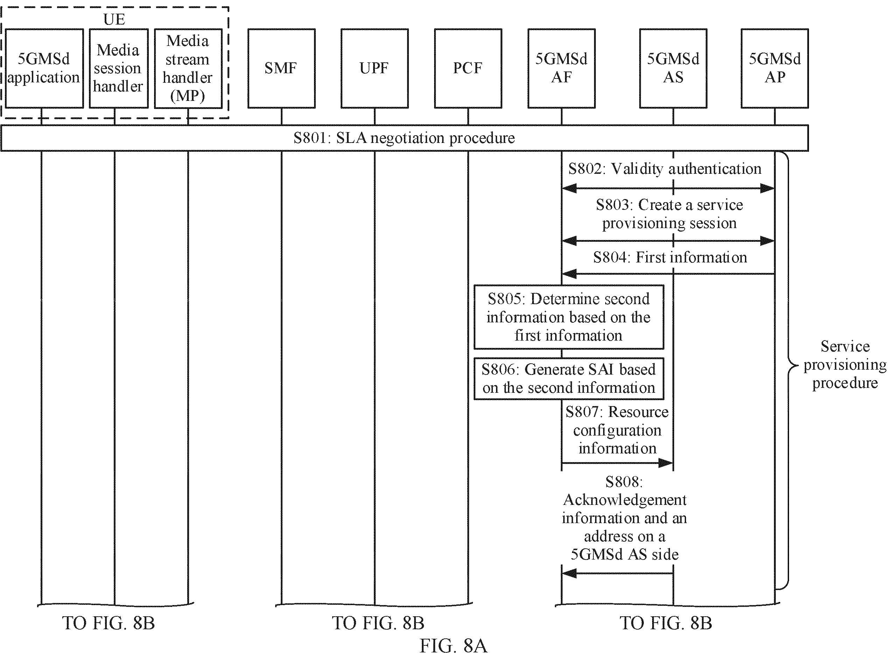

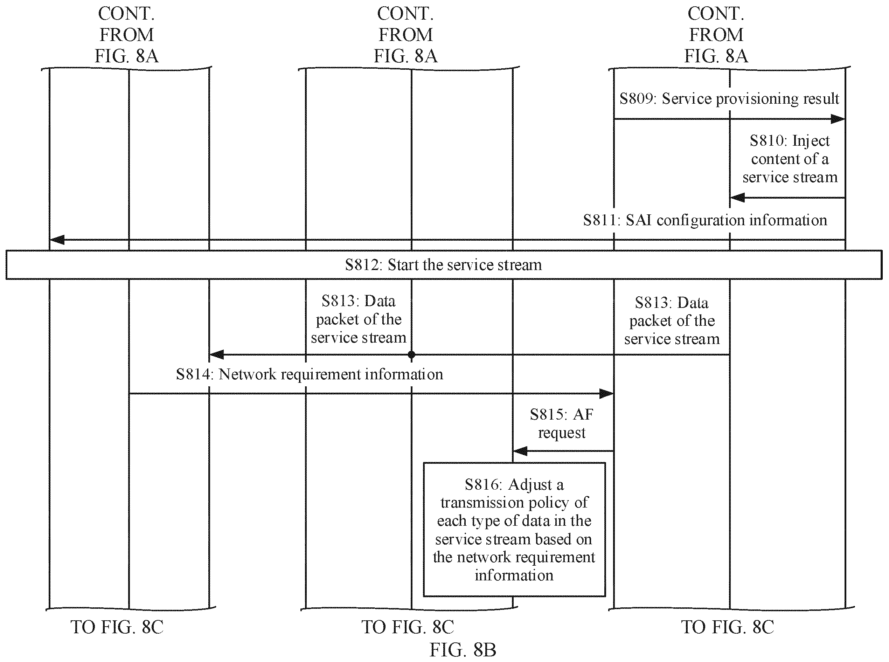

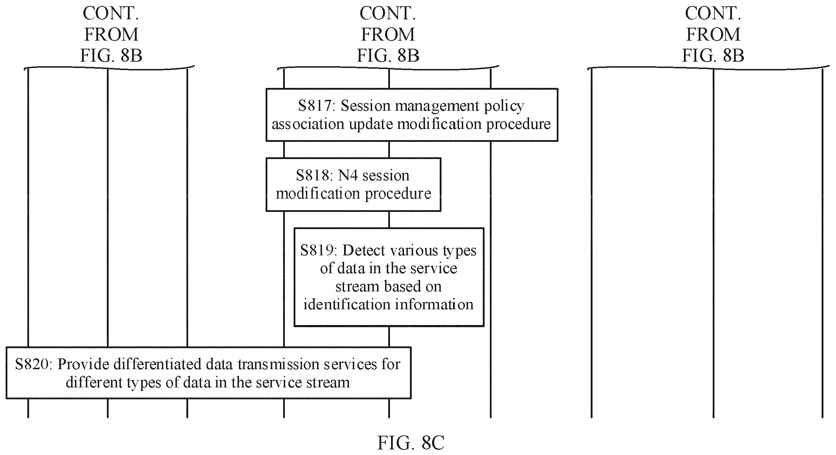

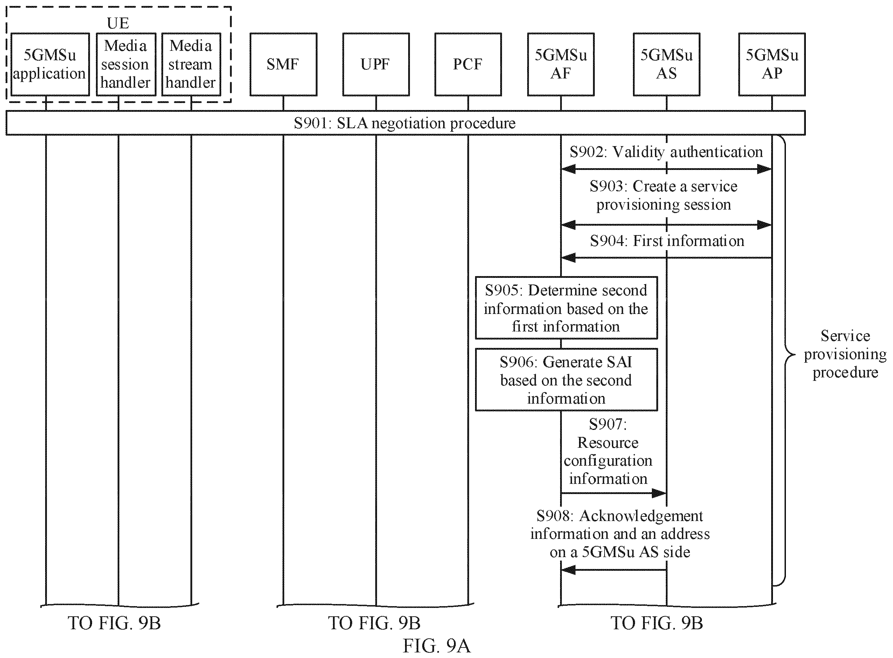

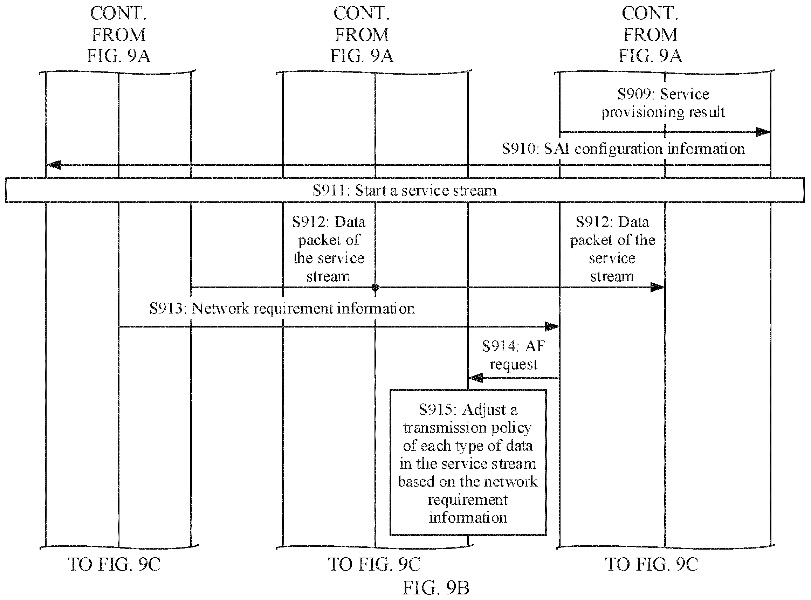

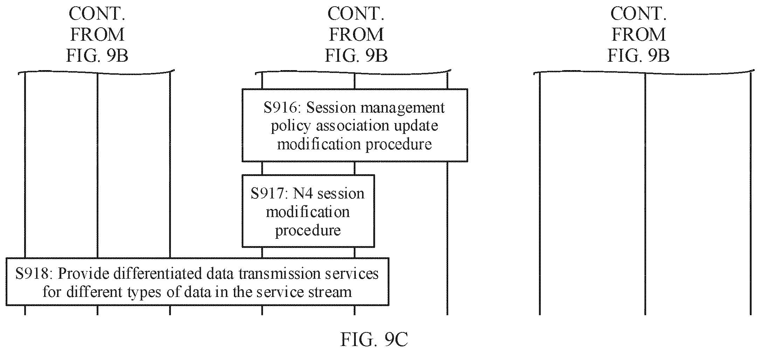

It should be noted that S701 and S702 may be performed in a service provisioning session (service provisioning session) procedure. For specific implementation, refer to the following communication method shown in FIG. 8A to FIG. 8C or FIG. 9A to FIG. 9C. Details are not described herein again.

S703: The application function network element sends the second information to a first device, and the first device receives the second information from the application function network element.

The first device is the source end device, and may include one or more of the following: a terminal device or an application server. For the downlink service stream, the application server is a source end device; and for the uplink service stream, the terminal device is a source end device.

Refer to FIG. 1. That the application function network element sends the second information to the application server may be specifically implemented as follows: The application function network element sends the second information to the application server through an M3 interface.

Specifically, the terminal device may obtain the content of the second information in one of the following manners.

Manner 1: The terminal device receives the second information from the application service provider by using an M8 interface.

Specifically, if the application function network element has reported the second information to the application service provider through the M1 interface, for example, the application service provider encapsulates the second information in service assistance information (service assistance information, SAI) for reporting, the application service provider may encapsulate the SAI in a service announcement (service announcement) message of the M8 interface for sending to the terminal device.

Alternatively, if the application function network element has reported an index of the second information, for example, an index of the SAI, to the application service provider through the M1 interface, the terminal device may further obtain the second information in the following manner 2.

Manner 2: The terminal device obtains the index of the second information, for example, the index of the SAI, from the application service provider by using the service announcement message of the M8 interface, and then obtains the content of the second information from the application function network element through an M5 interface based on the index.

S704: The first device adds the identification information to the data packet in the service stream.

The first device, namely, the source end device of the service stream, may add the identification information to some or all types of data in the service stream based on the second information.

For example, if the first device is a terminal device, the terminal device may add the identification information to data packets of some or all data types in an uplink service stream based on the second information.

For another example, if the first device is an application server, the application server may add the identification information to data packets of some or all data types in a downlink service stream based on the second information.

Based on the communication method described in S701 to S704, the application function network element may indicate, based on the first information, the source end device of the service stream, for example, the terminal device or the application server, to add the identification information to different types of data in the service stream, so that a network element on a transmission path of the service stream can identify the different types of data, and provide different network transmission policies for the different types of data, thereby providing differentiated data transmission services for the different types of data in the service stream, to ensure overall playing effect of the service stream. For example, real-time high-definition playing of the service stream is implemented in a scenario with sufficient network resources, good channel quality, and the like; and real-time smooth playing of the service stream is ensured in a scenario with limited network resources, poor channel quality, and the like, so that user experience is improved.

Optionally, if the first device is the terminal device, the following S705 may be further performed.

S705: The first device sends network requirement information to the application function network element.

The network requirement information is used to determine a network transmission capability required by a data packet of a first type in the data packet in the service stream, and the network transmission capability includes one or more of the following: a transmission bandwidth or a transmission delay. The first type is one or more data types in the service stream.

The network requirement information may be carried in a dynamic policy adjustment request message. In other words, the terminal device may actively initiate the dynamic policy adjustment request message to the application function network element, and the request message carries a quality requirement that can be achieved by a data transmission service expected by the terminal device.

It should be noted that the terminal device may initiate the data transmission policy adjustment request for both the downlink service stream and the uplink service stream. Correspondingly, the network may adjust a data transmission policy in real time based on the data transmission policy adjustment request, to provide a data transmission service that is more close to a user requirement, thereby improving user experience. Further, different users, different services, and different types of data packets of a same service usually have different transmission requirements, so that differentiated data transmission services are provided for the different users, the different services, or the different types of data in the same service.

With reference to two examples shown in FIG. 8A to FIG. 8C and FIG. 9A to FIG. 9C, the following describes in detail specific implementation of the communication method shown in FIG. 7 in a downlink scenario and an uplink scenario.

FIG. 8A to FIG. 8C are a schematic flowchart 2 of a communication method according to an embodiment of this application. The application service provider in FIG. 7 may be a 5GMSd AP shown in FIG. 8A to FIG. 8C, the application function network element in FIG. 7 may be a 5GMSd AF shown in FIG. 8A to FIG. 8C, and the first device shown in FIG. 7 may be a 5GMSd AS shown in FIG. 8A to FIG. 8C. The 5GMSd AS is a source device of a downlink service stream, and UE is a sink device of the downlink service stream.

As shown in FIG. 8A to FIG. 8C, the communication method includes the following steps.

S801: Optionally, an application service provider interacts with a network operator to perform an SLA negotiation procedure.

A negotiated SLA agreement includes cross-layer optimization indication information, and the indication information indicates a mobile network operator to provide a cross-layer optimization service for a service stream of the application service provider.

Optionally, the SLA agreement may further include a service identifier of a service that requires the mobile network operator to provide the cross-layer optimization service.

A person skilled in the art should understand that, when the SLA agreement does not include the service identifier of the service, it may be understood service streams of all services provided by the application service provider require the mobile network operator to provide a cross-layer optimization service.

Optionally, the application service provider may alternatively determine which service requires the network operator to provide a cross-layer optimization service, and notify the mobile network operator. Therefore, S801 may be considered as an optional step.

Then, a service provisioning session procedure may be executed, which specifically includes the following S802 to S809.

S802: The 5GMSd application service provider performs validity authentication with the 5GMSd AF.

Specifically, the 5GMSd AF performs authentication and authorization on the 5GMSd AP, to ensure that the 5GMSd AP has a capability of legally calling a 5GMSd AF API interface. For specific implementation, refer to an existing implementation solution. Details are not described herein again.

S803: The 5GMSd AP creates a service provisioning session.

Specifically, the 5GMSd AF and the 5GMSd AS are configured. A configuration includes a plurality of streaming media sub-functions of the service, such as parameter measurement and collection and dynamic measurement adjustment.

S804: The 5GMSd AP sends first information to the 5GMSd AF.

For content and a specific implementation of the first information, refer to related content in S701. Details are not described herein again.

Specifically, the first information may be carried in one or more of the following 5GMSd feature information elements (information elements, IEs) or fields (field), for example, parameter collection and reporting and dynamic policy adjustment. This is not limited herein.

S805: The 5GMSd AF determines second information based on the first information.

For a specific implementation, refer to related content in S702. Details are not described herein again.

S806: The 5GMSd AF generates SAI based on the second information.

Specifically, content of the second information may be carried in a field of the SAI, and the SAI is carried in a service data flow (service data flow, SDF) information element in a dynamic policy feature.

S807: The 5GMSd AF sends resource configuration information to the 5GMSd AS.

The resource configuration information includes interface configuration information, first indication information, and the second information. The interface configuration information is used to configure interfaces of the 5GMSd AS, including an M2 interface and an M4 interface.

Optionally, the interface configuration information may explicitly include the first indication information, and the first indication information indicates the 5GMSd AS to add identification information to some or all types of data in the service stream. Identification information of one or more types of data in the service stream may alternatively be used to implicitly indicate the 5GMSd AS to add identification information to some or all types of data in the service stream.

Specifically, the 5GMSd AF sends the resource configuration information to the 5GMSd AS through an M3d interface.

S808: The 5GMSd AS sends acknowledgment information and an address on a 5GMSd AS side to the 5GMSd AF.

The acknowledgment information indicates that resource configuration succeeds, and an M2 interface address on the 5GMSd AS side, for example, an internet (internet protocol, IP) address, is used by the 5GMSd AP to inject content of the service stream into the 5GMSd AS.

S809: The 5GMSd AF sends a service provisioning result to the 5GMSd AP.

The service provisioning result includes content of the SAI or an index of the SAI, the address on the 5GMSd AS side, and the like.

S810: The 5GMSd AP injects the content of the service stream into the 5GMSd AS.

Specifically, the 5GMSd AP sends the data packet of the service stream to the 5GMSd AS based on the address that is on the AS side and that is provided by the 5GMSd AF.

S811: The 5GMSd AF sends SAI configuration information to UE.

Specifically, after a service stream on a UE side starts, a client on the UE side may obtain the content of the SAI through an M8d interface or an M5d interface. For example, if the 5GMS AF sends the SAI to the 5GMSd AP in S809, the 5GMSd AP may add the SAI to a service announcement (service announcement) message sent to a 5GMSd application on the UE side through the M8d interface. The 5GMSd application may receive the SAI and forward the SAI to a media session handler.

For another example, if the 5GMS AF sends the index of the SAI to the 5GMSd AP in S809, the 5GMSd AP may add, through the M8d interface, the index of the SAI to the service announcement message sent to the 5GMSd application on the UE side. The 5GMSd application may receive the index of the SAI and forward the index of the SAI to the media session handler. Then, the media session handler obtains the SAI from the 5GMSd AF through the M5d interface based on the index of the SAI.

S812: Start the service stream.

Specifically, the streaming media application on the UE side is started, and a user starts a media streaming service.

S813: The 5GMSd AS sends the data packet of the service stream to a terminal device.

Specifically, the 5GMSd AS sends the data packet of the service stream to the terminal device based on the second information. Some or all types of data packets carry identification information, a value of the identification information is determined based on the second information, and identification information carried in different types of data packets is different.

Specifically, various types of data packets in the service stream may arrive at a media stream handler on the UE side in a transmission path 5GMSd AS->UPF->(R)AN->UE, for decoding and playing.

S814: The UE sends network requirement information to the 5GMSd AF.

For specific implementation of the network requirement information, refer to related content in S705. Details are not described herein again.

Optionally, the network requirement information may be carried in dynamic policy configuration information in the SAI. For example, the dynamic policy configuration information carries an SDF that may be used to detect corresponding identification information, and is sent to a 5GMSd AF side, so that the 5GMSd AF requests a core network to perform QoS control and transmission policy adjustment on some or all types of data in the service stream, that is, perform the following S815.

S815: The 5GMSd AF initiates an AF request to a PCF network element.

The AF request (AF request) may include stream description information of the service stream and the network requirement information received in S813. The stream description information may include data packet filtering information (such as an IP quintuple or an application identifier) of the service stream, and the identification information of some or all types of data in the service stream of the service. The network requirement information corresponds to the identification information, so that the PCF network element adjusts a transmission policy of some or all types of data accordingly.

Specifically, the application function network element may send the stream description information of the service stream and the network requirement information received in S813 to the policy control network element through an N5 interface. Alternatively, the application function network element may send the stream description information of the service stream and the network requirement information received in S813 to a network exposure function (network exposure function, NEF) network element through an N33 interface, and then the NEF forwards, to the policy control network element, the stream description information of the service stream and the network requirement information received in S813.

S816: The PCF adjusts a transmission policy of each type of data in the service stream based on the network requirement information.

The data transmission policy may include an updated PCC rule, an adjusted QoS policy, or the like.

S817: The PCF initiates a session management policy association update modification procedure to an SMF.

Specifically, the PCF may send a modified PCC rule to the SMF, and then the SMF performs a corresponding PDU session modification procedure.

S818: The SMF and a UPF perform an N4 session modification procedure.

The N4 session modification procedure is used to update a packet detection rule (packet detection rule, PDR, also referred to as a packet detection rule) on a UPF side, to ensure that a 5GS identifies different types of data packets in the service stream, and provides differentiated network transmission services for the data packets.

S819: Detect various types of data in the service stream based on the identification information.

Specifically, various types of data in the service stream are distinguished by detecting the identification information carried in the data packet.

S820: Provide differentiated data transmission services for different types of data in the service stream.

For example, in a 5GS transmission process, different types of data packets are guaranteed with different QoS quality, for example, different data transmission rates and different transmission delays.

Based on the solution shown in FIG. 8A to FIG. 8C, the 5GMSd AF may indicate, based on the first information provided by the 5GMSd AP, the source end device 5GMSd AS of the downlink service stream to identify different types of data in a media downstream service, so as to ensure that the different types of data can be sensed and identified by a network side, thereby implementing differentiated 5G policy processing for the different types of data in the media downstream service, and effectively ensuring user service experience.

FIG. 9A to FIG. 9C are a schematic flowchart 3 of a communication method according to an embodiment of this application. The application service provider in FIG. 7 may be a 5GMSu AP shown in FIG. 9A to FIG. 9C, the application function network element in FIG. 7 may be a 5GMSu AF shown in FIG. 9A to FIG. 9C, and the first device shown in FIG. 7 may be UE shown in FIG. 9A to FIG. 9C. The UE is a source end device of an uplink service stream, and the 5GMSu AS is a sink end device of the uplink service stream.

As shown in FIG. 9A to FIG. 9C, the communication method includes the following steps.

S901: An application service provider interacts with a network operator to perform an SLA negotiation procedure.

S902: The 5GMSu application service provider and a 5GMSu AF perform validity authentication for each other.

S903: The 5GMSu AP creates a service provisioning session.

S904: The 5GMSu AP sends first information to the 5GMSu AF.

S905: The 5GMSu AF determines second information based on the first information.

S906: The 5GMSu AF generates SAI based on the second information.

For specific implementations of S901 to S906, refer to S801 to S807. Details are not described herein again.

S907: The 5GMSu AF sends resource configuration information to the 5GMSu AS.

The resource configuration information may include M4u interface information, an address on a 5GMSu AS side, and the like. The address on the 5GMSu AS side is a receiving address of the uplink service stream.

S908: The 5GMSu AS sends acknowledgment information and the address on the 5GMSu AS side to the 5GMSu AF.

The acknowledgment information indicates that the resource configuration information is successfully received, and the address on the 5GMSu AS side, for example, an IP address, is used by the UE to send content of the service stream to the 5GMSu AS.

S909: The 5GMSu AF sends a service provisioning result to the 5GMSu AP.

The service provisioning result includes the SAI or an index of the SAI and the address on the 5GMSu AS side.

S910: The 5GMSu AF sends SAI configuration information to the UE.

Specifically, after a service stream on the UE side starts, a client on the UE side may obtain corresponding SAI through an M8u interface or an M5u interface. For example, if the 5GMSu AF sends the SAI configuration information to the 5GMSu AP in S909, the 5GMSu AP may add the SAI to a service announcement message sent to a 5GMSu application on the UE side, and the 5GMSu application may receive the SAI and forward the SAI to a media session handler.

For another example, if the 5GMSu AF sends index information of the SAI to the 5GMSu AP in S909, the 5GMSu AP may add, through the M8u interface, an index of the SAI to the service announcement message sent to the 5GMSu application on the UE side. The 5GMSu application may receive the index of the SAI and forward the index of the SAI to the media session handler. Then, the media session handler obtains the SAI from the 5GMSu AF through the M5u interface based on the index of the SAI.

S911: Start the service stream.

S912: A terminal device sends the data packet of the service stream to the 5GMSu AS.

Specifically, the terminal device sends various types of data packets in the service stream to the 5GMSu AS based on the second information. Values and carrying locations of identification information carried in some or all types of data packets may be determined based on the second information, and identification information carried in different types of data packets is different.

Specifically, the media session handler on the UE side may send configuration information to a media stream handler, and the media stream handler adds corresponding identification information and sends the configuration information to the 5GMSu AS. The identification information may be carried in a packet data convergence protocol (packet data convergence protocol, PDCP) layer, a service data adaptation protocol (service data adaptation protocol, SDAP) layer, an IP layer, a transport layer, an application layer, or a newly defined intermediate layer. This is not limited herein.

Specifically, various types of data packets in the service stream may arrive at the 5GMSu AS side in a transmission path UE->(R)AN->UPF->5GMSu AS.

S913: Optionally, the UE sends network requirement information to the 5GMSu AF.

S914: The 5GMSu AF initiates an AF request to a PCF network element.

S915: The PCF adjusts a transmission policy of each type of data in the service stream based on the network requirement information.

S916: The PCF initiates a session management policy association update modification procedure to an SMF.

S917: The SMF and a UPF perform an N4 session modification procedure.

S918: Provide differentiated data transmission services for different types of data in the service stream.

For specific implementations of S913 to S918, refer to S814 to S820. Details are not described herein again.

Based on the solution shown in FIG. 9A to FIG. 9C, the 5GMSu AF may indicate, based on the first information provided by the 5GMSu AP, the source device UE of the uplink service stream to identify different types of data in a media upstream service, to ensure that the different types of data can be sensed and identified by a network side, thereby implementing differentiated 5G policy processing for the different types of data in the media upstream service, and effectively ensuring user service experience.

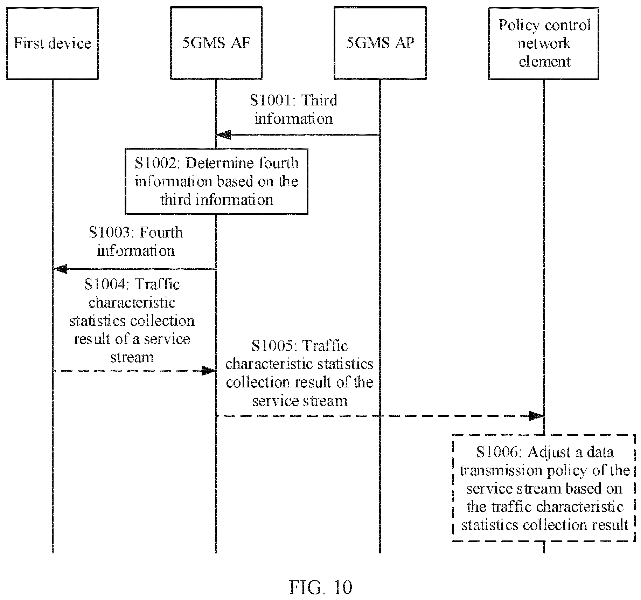

FIG. 10 is a schematic flowchart 4 of a communication method according to an embodiment of this application. The communication method is applicable to the communication system shown in any one of FIG. 1 to FIG. 3 and FIG. 5.

FIG. 10 is a schematic flowchart 4 of a communication method according to an embodiment of this application. The communication method is applicable to the communication system shown in any one of FIG. 1 to FIG. 3 and FIG. 5. The communication system shown in FIG. 1 is used as an example. An application service provider in FIG. 10 may be the 5GMS AP shown in FIG. 1, an application function network element in FIG. 10 may be the 5GMS AF shown in FIG. 1, and a second device shown in FIG. 10 may be the terminal device or the 5GMS AS shown in FIG. 1. In other words, uplink and downlink service streams are not distinguished in the solution. It may be understood that the solution is applicable to uplink and downlink service streams.

As shown in FIG. 10, the communication method includes the following steps.

S1001: An application service provider sends third information to an application function network element, and the application function network element receives the third information from the application provider.

The third information indicates to collect statistics on a traffic characteristic of a service stream.

For example, the traffic characteristic may include one or more of the following: a data amount, a data transmission rate, a bit error rate, channel quality, signal strength, signal quality, a data transmission periodicity, a transmission delay, or the like. This is not limited in this embodiment of this application.

Optionally, the third information may include one or more of the following: cross-layer optimization indication information, or a service identifier of a service corresponding to the service stream.

In some embodiments, the third information may include only the cross-layer optimization indication information. The cross-layer optimization indication information indicates to collect statistics on a traffic characteristic of the service stream, which may be understood as explicitly indicating to collect statistics on traffic characteristics of all service streams provided by the application service provider.

In some other embodiments, the third information may include only the service identifier of the service corresponding to the service stream. The service identifier of the service refers to service stream description information used to determine the service, for example, IP quintuple information, or one or more pieces of characteristic information in an IP layer, a transport layer, and an application layer. In this case, this may be understood as implicitly indicating to collect statistics on only a traffic characteristic of a service stream corresponding to a specified service provided by the application service provider. There may be one or more service identifiers of the service corresponding to the service stream. This is not limited in this embodiment of this application.

In some other embodiments, that the third information may include both the cross-layer optimization instruction and the service identifier of the service corresponding to the service stream may be understood as: explicitly indicating to collect statistics on a traffic characteristic of a service stream corresponding to a service specified by the application service provider. There may be one or more service identifiers of the service corresponding to the service stream. This is not limited in this embodiment of this application.

In this embodiment of this application, an explicit manner may be used to indicate to perform a traffic characteristic statistics collection operation on a service stream of which service, for example, a solution in which the third information includes the cross-layer optimization indication information; or an implicit manner may be used to indicate to perform a traffic characteristic statistics collection operation on a service stream of which service, for example, a solution in which the third information includes the service identifier of the service corresponding to the service stream and does not include cross-layer optimization indication information. A specific solution may be determined by the application service provider based on an actual requirement. This is not limited in this embodiment of this application.

Refer to FIG. 1. The application service provider and the application function network element may transmit the third information through an M1 interface.

Optionally, before S1001 is performed, the method shown in FIG. 10 further includes: The application service provider determines the third information. For example, the application service provider may select a service from all services provided by the application service provider, where a traffic characteristic statistics collection operation needs to be performed on a service stream of the service, so as to generate content of the third information.

Optionally, before S1001 is performed, the method shown in FIG. 10 further includes: The application service provider and the mobile network operator may negotiate a service stream on which the traffic characteristic statistics collection operation needs to be performed. A negotiation process may be executed in an online manner, or may be executed in an offline manner, and a reached conclusion, for example, an SLA agreement, is stored in a local storage of the application service provider or the application function network element in a manner of a computer-readable file or configuration information for backup. Content of the SLA agreement may include a part or all of the content of the third information.

S1002: The application function network element determines fourth information based on the third information.

The fourth information includes one or more of the following: the service identifier of the service corresponding to the service stream, the data amount, the data transmission rate, the data transmission periodicity, the bit error rate, the transmission delay, or a reporting periodicity. The fourth information may be associated with service streams of some or all services in the services provided by the application service provider.

In some embodiments, when the third information includes only the cross-layer optimization indication, a traffic characteristic included in the fourth information is applicable to the service streams of all of the services provided by the application service provider, that is, a same traffic characteristic needs to be collected for the service streams of all of the services provided by the application service provider.

In some other embodiments, when the third information may include only the service identity of the service corresponding to the service stream, or the third information may include both the cross-layer optimization indication and the service identity of the service corresponding to the service stream, the traffic characteristic included in the fourth information is applicable only to the service stream of the service corresponding to the service identifier, that is, only statistics of the traffic characteristic of the service stream of the service corresponding to the service identifier need to be collected, and statistics of a traffic characteristic of a service stream of a service that is other than the service corresponding to the service identifier and that is in the services provided by the application service provider do not need to be collected.

Further, if the third information indicates that the traffic characteristic statistics collection operation needs to be performed on service streams of a plurality of services, for example, the third information includes a plurality of service identifiers, or the third information includes only the cross-layer optimization indication, and the application service provider provides a plurality of services, the fourth information may also include a plurality of service identifiers. Traffic characteristics that are of the plurality of service streams and on which statistics collection need to be performed may be the same or may be different. This is not limited in this embodiment of this application.

Further, content of the fourth information may be the same as or different from the content of the third information. When the content of the fourth information and the content of the third information are the same, it may be understood that the application service provider has specified a service, where statistics collection needs to be performed on a traffic characteristic of the service, and the application function network element only needs to send the third information to the source end device or the sink end device of the service stream.

Alternatively, when the content of the fourth information is different from the content of the third information, it may be understood that the application service provider only notifies the application function network element that statistics of a traffic characteristic of a service stream of which service need to be collected and specific content of the traffic characteristic may be determined by the application function network element. For example, if the third information obtained by the application function network element includes the service identifier, the application function network element may determine, based on the service identifier, statistics of which traffic characteristic of a service corresponding to the service identifier need to be collected. In other words, the third information may be provided by the application service provider, and the content of the fourth information may be determined by the application function network element based on the third information, so that the application function network element has freedom and flexibility in a process of determining specific content of a traffic characteristic on which statistics collection needs to be performed.

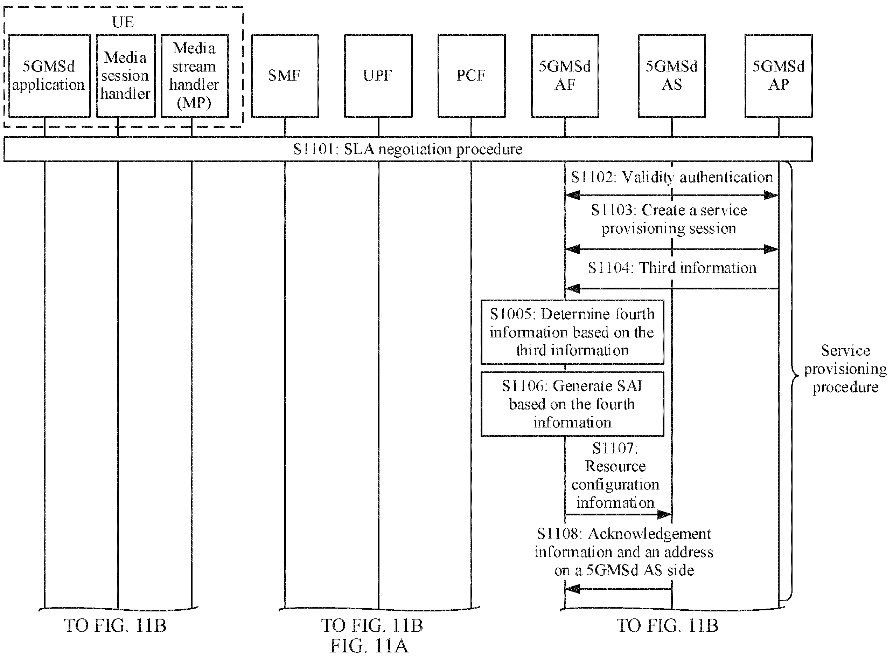

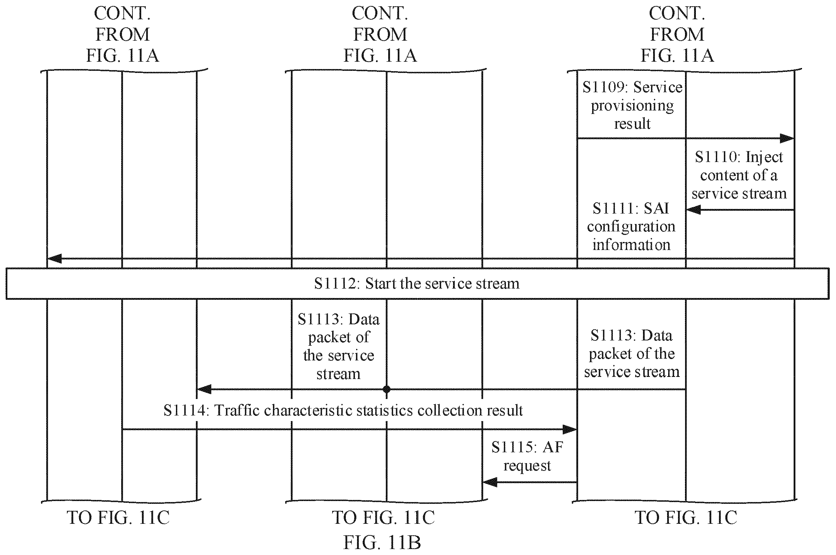

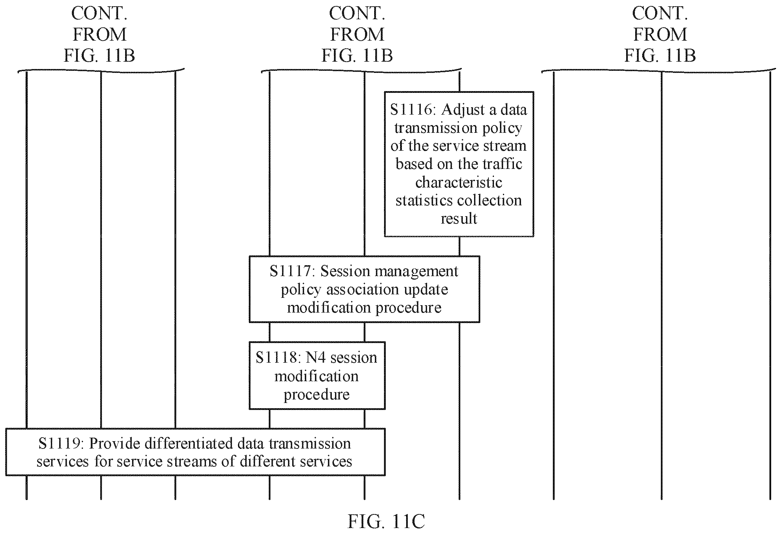

It should be noted that S1001 and S1002 may be performed in a service provisioning session procedure. For specific implementation, refer to the following communication method shown in FIG. 11A to FIG. 11C. Details are not described herein again.

S1003: The application function network element sends the fourth information to a second device, and the second device receives the fourth information from the application function network element.

For example, the second device may include one or more of the following: an application server, a terminal device, an (R)AN, or a UPF. The second device may be a source end device, or may be a sink end device, or may be an intermediate device. Specifically, for a downlink service stream, the application server is a source end device, and the terminal device is a sink end device; and for an uplink service stream, the terminal device is a source end device, and the application server is a sink end device. The (R)AN and the UPF network element are intermediate devices in both uplink and downlink directions.

Optionally, that the fourth information is sent to the second device includes one or more of the following: The application function network element sends the fourth information to the application server; or the application function network element sends the fourth information to the terminal device; or the application function network element sends the fourth information to the intermediate device.

Refer to FIG. 1. That the application function network element sends the fourth information to the application server may be specifically implemented as follows: The application function network element sends the fourth information to the application server through an M3 interface.

Specifically, the terminal device may obtain the content of the fourth information in one of the following manners.

Manner 3: If the application function network element has reported the fourth information to the application service provider through the M1 interface, for example, the fourth information is encapsulated in the SAI for reporting, the application service provider may encapsulate the SAI in a service announcement message of the M8 interface and send the service announcement message to the terminal device, that is, the terminal device may receive the fourth information from the application service provider through the M8 interface.

If the application function network element has reported an index of the fourth information to the application service provider through the M1 interface, the terminal device may further obtain the fourth information in the following manner 4.

Manner 4: The terminal device receives the index of the fourth information from the application service provider through the M8 interface, and then obtains the fourth information from the application function network element through an M5 interface based on the index.

Specifically, if the application function network element has reported the index of the fourth information to the application service provider through the M1 interface, for example, the fourth information is encapsulated in the SAI for reporting, the terminal device obtains the index of the fourth information from the application service provider by using the service announcement message of the M8 interface, for example, the index of the SAI, and then obtains the content of the fourth information from the application function network element through the M5 interface based on the index.

Optionally, after S1001 to S1003 are performed, the communication method shown in FIG. 10 may further include the following steps.

S1004: The second device sends a traffic characteristic statistics collection result of the service stream to the application function network element, and the application function network element receives the traffic characteristic statistics collection result of the service stream from the second device.

The traffic characteristic statistics collection result is determined based on the fourth information, and the traffic characteristic statistics collection result is used to adjust a data transmission policy of the service stream. In other words, the traffic characteristic statistics collection result is obtained through statistics collection based on the content of the fourth information, for example, which traffic indicator is measured, and how to process a measurement result of the traffic indicator to generate the traffic characteristic statistics collection result.

Optionally, the traffic characteristic statistics collection result may be reported by one or more of the following devices: the source end device of the service stream, the sink end device of the service stream, or the intermediate device of the service stream. Specific content may include one or more of the following: a data amount, a data transmission rate, a bit error rate, channel quality, signal strength, signal quality, a data transmission periodicity, a transmission delay, or the like. This is not limited in this embodiment of this application.

Optionally, the traffic characteristic statistics collection result may further include a service identifier of the service corresponding to the service stream, so that the policy control network element may distinguish a service stream of a service for which the traffic characteristic statistics collection result is targeted, so as to provide differentiated data transmission services for different service streams.

Regardless of whether the second device is the source end device or the sink end device, the second device may perform a traffic statistics collection and reporting operation of the service stream based on the fourth information.

A transmission periodicity of a downlink service stream is used as an example. The application server is a source end device, and the terminal device is a sink end device. In this case, the application server may collect statistics on and report a transmission periodicity characteristic of the downlink service stream, including a periodicity size of data transmission and a data amount of each periodicity, and report the information to the application function network element. Similarly, the terminal device may further collect statistics on a rule of arrival of downlink data, determine periodicity of data transmission, and report the information to the application function network element.

S1005: The application function network element sends the traffic characteristic statistics collection result to a policy control network element, and the policy control network element receives the traffic characteristic statistics collection result from the application function network element.

Refer to FIG. 1. The terminal device may report the traffic characteristic statistics collection result to the application function network element through the M5 interface, and the application server may report the traffic characteristic statistics collection result to the application function network element through the M3 interface.

Specifically, the application function network element may send the traffic characteristic statistics collection result to the policy control network element through an N5 interface. Alternatively, the application function network element may send the traffic characteristic statistics collection result to a network exposure function network element (network exposure function, NEF) through an N33 interface, and then the NEF forwards the traffic characteristic statistics collection result to the policy control network element.

S1006: The policy control network element adjusts the data transmission policy of the service stream based on the traffic characteristic statistics collection result.

Specifically, the policy control network element may adjust, based on the traffic characteristic statistics collection result, a data transmission policy of the service stream of the service corresponding to the service identifier, for example, increasing/decreasing a transmission resource, or increasing/decreasing a transmission delay, so as to provide differentiated network transmission services for service streams of different services.

Based on the communication method shown in FIG. 10, the application function network element may indicate, based on the third information provided by the application service provider, the source end device or the sink end device of the service stream to collect statistics on and report the traffic characteristic of the service stream of the service provided by the application service provider. Then, the application function network element may send the received traffic characteristic statistics collection result to the policy control network element in an operator network, so that the policy control network element dynamically adjusts the data transmission policy of the service stream based on the traffic characteristic statistics collection result, so as to provide differentiated data transmission services for different service streams, for example, service streams of different priorities, thereby ensuring transmission quality of a high-priority service stream. For example, in a scenario with a limited network resource, poor channel quality, or the like, processing such as resource pre-scheduling is performed based on a traffic characteristic of a service stream, so that quality of service of high-priority service streams is improved.

With reference to an example shown in FIG. 11A to FIG. 11C, the following describes in detail specific implementation of the communication method shown in FIG. 10 in a downlink scenario.

FIG. 11A to FIG. 11C are a schematic flowchart 5 of a communication method according to an embodiment of this application. The application service provider in FIG. 10 may be a 5GMSd AP shown in FIG. 11A to FIG. 11C, the application function network element in FIG. 10 may be a 5GMSd AF shown in FIG. 11A to FIG. 11C, and the second device shown in FIG. 7 may be a 5GMSd AS or UE shown in FIG. 11A to FIG. 11C.

As shown in FIG. 11A to FIG. 11C, the communication method includes the following steps.

S1101: A 5GMSd AP interacts with a network operator to perform an SLA negotiation procedure.

A negotiated SLA agreement includes cross-layer optimization indication information, and the cross-layer optimization indication information indicates a mobile network operator to provide a cross-layer optimization service for a service stream of the 5GMSd AP.

Optionally, the SLA agreement may further include a service identifier of a downlink service that requires the mobile network operator to provide the cross-layer optimization service.

A person skilled in the art should understand that, when the SLA agreement does not include the service identifier, it may be understood that all downlink service streams provided by the 5GMSd AP require the mobile network operator to provide a cross-layer optimization service.

Optionally, the 5GMSd AP may alternatively determine a service stream of which service requires the network operator to provide a cross-layer optimization service, and notify the mobile network operator. Therefore, S1101 may be considered as an optional step.

Then, a service provisioning session procedure may be executed, which specifically includes the following S1102 to S1109.

S1102: The 5GMSd AP and the 5GMSd AF perform validity authentication for each other.

For specific implementation, refer to an existing implementation solution. Details are not described herein again.

S1103: The 5GMSd AP creates a service provisioning session.

S1104: The 5GMSd AP sends third information to a 5GMSd AF.

The third information may include one or more of the following: the cross-layer optimization indication information or the service identifier. For content and a specific implementation of the third information, refer to related content in S1001. Details are not described herein again.

Specifically, the third information may be carried in one or more of the following 5GMS feature information elements (information element, IE), for example, parameter collection and reporting, dynamic policy adjustment, or another information element. This is not limited herein.

S1105: The 5GMSd AF determines fourth information based on the third information.

For a specific implementation, refer to related content in S1002. Details are not described herein again.

S1106: The 5GMSd AF generates SAI based on the fourth information.

Specifically, content of the fourth information may be carried in a field of the SAI, and the SAI is carried in the parameter collection and reporting information element.

S1107: The 5GMSd AF sends resource configuration information to the 5GMSd AS.

The resource configuration information includes interface configuration information, second indication information, and the fourth information. The interface configuration information is used to configure an interface of the 5GMSd AS, and the second indication information indicates the 5GMSd AS to collect statistics on and report a traffic characteristic statistics collection result of service streams of some or all services provided by the 5GMSd AP.

Specifically, the 5GMSd AF sends the resource configuration information to the 5GMSd AS through an M3d interface.

S1108: The 5GMSd AS sends acknowledgment information and an address on a 5GMSd AS side to the 5GMSd AF.

The acknowledgment information indicates that resource configuration succeeds, and the address on the 5GMSd AS side, for example, an IP address, is used by the 5GMSd AP to inject content of the downlink service stream into the 5GMSd AS.

S1109: The 5GMSd AF sends a service provisioning result to the 5GMSd AP.

The service provisioning result includes the SAI or an index of the SAI and the address on the 5GMSd AS side.

S1110: The 5GMSd AP injects content of the service stream into the 5GMSd AS.

Specifically, the 5GMSd AP sends, to the 5GMSd AS based on the address that is on the 5GMS AS side and that is provided by the 5GMSd AF, a data packet of a service stream of a service corresponding to the service identifier.

S1111: The 5GMSd AF sends SAI configuration information to UE.

The SAI configuration information may include the SAI or the index of the SAI, and indicates the UE to collect statistics on and report a traffic characteristic statistics collection result of some or all service streams.

Specifically, after a service stream on a UE side starts, a client on the UE side may obtain corresponding SAI through an M8d interface or an M5d interface. For example, if the 5GMS AF sends the SAI to the 5GMSd AP in S1109, the 5GMSd AP may add the SAI to a service announcement message sent to a 5GMSd application on the UE side, and the 5GMSd application may receive the SAI and forward the SAI to a media session handler.

For another example, if the 5GMS AF sends the index of the SAI to the 5GMSd AP in S1109, the 5GMSd AP may add, through the M8d interface, the index of the SAI to the service announcement message sent to the 5GMSd application on the UE side. The 5GMSd application may receive the index of the SAI and forward the index of the SAI to the media session handler. Then, the media session handler obtains the SAI from the 5GMSd AF through the M5d interface based on the index of the SAI.

S1112: Start the service stream.

S1113: The 5GMSd AS sends the service stream to the UE.

Specifically, the 5GMSd AS may perform service traffic statistics collection and reporting in a process in which the 5GMSd AS sends a data packet of the service stream to the UE based on the fourth information.

For example, the data packet of the service stream may arrive at a media stream handler (MP) on the UE side in a transmission path 5GMS AS->UPF->(R)AN->UE, for decoding and playing.

S1114: Optionally, the UE sends the traffic characteristic statistics collection result to the 5GMSd AF.

Optionally, the traffic characteristic statistics collection result may be carried in a parameter collection and reporting information element in the SAI.

Specifically, after receiving the fourth information, the media session handler may configure the media stream handler to collect statistics and report a traffic characteristic statistics collection result of the service stream of the service corresponding to the service identifier.

It should be noted that, all of the source end device (5GMS AS), the sink end device (UE), and the relay device ((R)AN and UPF) of the downlink service stream may perform an operation of collecting statistics on and reporting the traffic characteristic of the service stream. In other words, the second device may further include an intermediate device. This is not limited herein.

S1115: Optionally, the 5GMSd AF initiates an AF request to a PCF network element.

The AF request may include a service identifier and a traffic characteristic statistics collection result of a service stream of a service corresponding to the service identifier.

For specific interaction between the application function network element and the PCF, refer to S1005.

S1116. The PCF adjusts a data transmission policy of the service stream based on the traffic characteristic statistics collection result.

The data transmission policy may include updating a PCC rule, adjusting a QoS policy, and the like, that is, performing the following S1117 and S1118.

S1117: The PCF initiates a session management policy association update modification procedure to an SMF.

Specifically, the PCF may send a modified PCC rule, a modified QoS rule, and the like to the SMF, and then the SMF performs a PDU session modification procedure.

S1118: The SMF and a UPF perform an N4 session modification procedure.

The N4 session modification procedure is used to update a PDR on a UPF side to ensure that a 5GS identifies a service traffic characteristic and provides a differentiated network transmission service.

S1119: Provide differentiated data transmission services for service streams of different services.

It should be noted that the communication method shown in FIG. 11A to FIG. 11C is also applicable to an uplink service stream. Specifically, the uplink service stream may arrive at the 5GMSu AS in a transmission path UE->(R)AN->UPF->5GMSu AS, so as to upload content of the uplink service stream to a network. In addition, a source device (UE), a sink device (5GMSu AS), and a relay device ((R)AN and UPF) of the uplink service stream may also perform an operation of collecting statistics on and reporting a traffic characteristic of the service stream. This is not limited herein.

Based on the communication method shown in FIG. 11A to FIG. 11C, the 5GMSd AF may indicate, based on the third information provided by the 5GMSd AP, the source end device or the sink end device of the service stream to collect statistics on and report the traffic characteristic of the service stream of the service provided by the 5GMSd AS. Then, the 5GMSd AF may send the received traffic characteristic statistics collection result to the policy control network element in an operator network, so that the policy control network element dynamically adjusts the data transmission policy of the service stream based on the traffic characteristic statistics collection result, so as to provide differentiated data transmission services for different service streams, for example, service streams of different priorities, thereby ensuring transmission quality of a high-priority service stream. For example, in a scenario with a limited network resource, poor channel quality, or the like, processing such as resource pre-scheduling is performed based on a traffic characteristic of a service stream, so that quality of service of the service stream is improved.

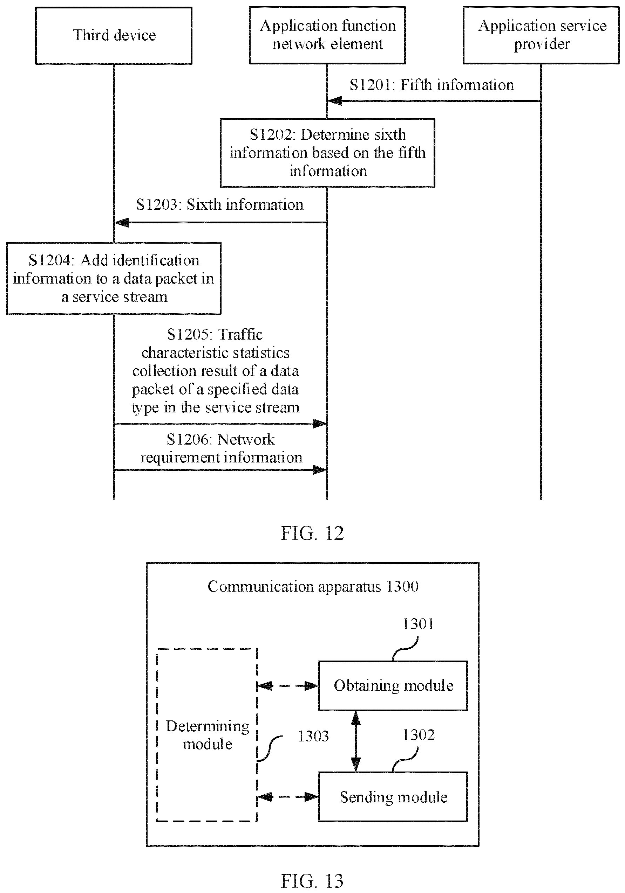

It should be noted that the solution shown in any one of FIG. 7 to FIG. 9A to FIG. 9C and the solution shown in any one of FIG. 10 and FIG. 11A to FIG. 11C may alternatively be implemented in combination. The following uses a solution (FIG. 12) combining the solution shown in FIG. 7 and the solution shown in FIG. 10 as an example for description.

FIG. 12 is a schematic flowchart 6 of a communication method according to an embodiment of this application. The communication method is applicable to the communication system shown in any one of FIG. 1 to FIG. 3 and FIG. 5. The communication system shown in FIG. 1 is used as an example. An application service provider in FIG. 12 may be the 5GMS AP shown in FIG. 1, an application function network element in FIG. 12 may be the 5GMS AF shown in FIG. 1, and a first device shown in FIG. 12 may be the terminal device or the 5GMS AS shown in FIG. 1.

As shown in FIG. 12, the communication method includes the following steps.

S1201: An application service provider sends fifth information to an application function network element, and the application function network element receives the fifth information from the application provider.

The fifth information includes the content of the first information in S701 and the content of the third information in S1001.

S1202: The application function network element determines sixth information based on the fifth information.

The sixth information includes the content of the second information and the content of the fourth information.

S1203: The application function network element sends the sixth information to a third device, and the third device receives the sixth information from the application function network element.

The third device may be a union set of the first device and the second device.

It should be noted that, if the third device is a source end device, the following S1204 may be performed.

S1204: The third device adds identification information to a data packet in a service stream.

S1205: The third device sends a traffic characteristic statistics collection result of a data packet of a specified data type in the service stream to the application function network element, and the application function network element receives the traffic characteristic statistics collection result reported by the third device.

It should be noted that, regardless of whether the third device is one of a source end device, a sink end device, or an intermediate device, the third device may perform traffic statistics collection and reporting operations of some or all data types in the service stream based on the sixth information.

Optionally, if the third device is the terminal device, the following S1206 may be further performed.

S1206: The third device sends network requirement information to the application function network element.

The network requirement information may be determined based on traffic characteristic statistics collection results and/or identification information of different types of data in the service stream.

Specifically, if the third device in S 1205 and the third device in S 1206 are a same device, the network requirement information and the traffic characteristic statistics collection result may be carried in a same message, for example, reported together in a dynamic policy adjustment request message, or may be reported by using different messages. This is not limited herein.

Then, the application function network element may send the traffic characteristic statistics collection result and/or the network requirement information to a policy control network element, and the policy control network element adjusts data transmission policies of different types of data in the service streams based on the traffic characteristic statistics collection result and/or the network requirement information, so as to provide differentiated network transmission services for service streams of different services and/or different types of data in service streams of a same service.

It should be noted that, a statistical granularity of the traffic characteristic statistics collection result in the communication method shown in FIG. 12 may be accurate to different data types in a service stream. Based on this, the policy control network element may provide a more accurate differentiated network transmission service for the application service provider and a user, and this may further improve user experience.

Different from the communication method shown in any one of FIG. 7 to FIG. 9A to FIG. 9C in which the policy control network element adjusts the network transmission policies of the different types of data in the service stream only based on the identification information of the different types of data in the service stream, in the communication method shown in FIG. 12, the network transmission policies of the different types of data are adjusted based on identification information of the different types of data in the service stream and traffic characteristic statistics collection results of the different types of data in the service stream. In this way, factors considered are more comprehensive, and the policy control network element can provide a more timely differentiated network transmission service for the application service provider and the user, and this further improves user experience.

In addition, different from the communication methods shown in FIG. 10 and FIG. 11A to FIG. 11C in which a granularity of the traffic characteristic statistics collection result is a service stream, in the communication method shown in FIG. 12, the granularity of the traffic characteristic statistics collection result may be accurate to the different data types in the service stream. Based on this, the policy control network element may provide a more accurate differentiated network transmission service for the application service provider and the user, and this may further improve user experience.

It should be noted that, in this embodiment of this application, various types of data in a service stream of a same service may also be referred to as substreams (substreams) in the service stream. For example, a service stream 1 provided by an application service provider 1 includes two types of data in total: a foreground stream and a background stream. In this case, the foreground stream and the background stream may also be referred to as substreams of the service stream 1. In other words, in this embodiment of this application, the substream and the data type have a same meaning, and may be replaced with each other.

The foregoing describes in detail communication methods provided in embodiments of this application with reference to FIG. 7 to FIG. 12. The following describes in detail with reference to FIG. 13 to FIG. 16, a communication apparatus configured to perform the communication methods provided in embodiments of this application.

For example, FIG. 13 is a schematic diagram 1 of a structure of a communication apparatus according to an embodiment of this application. As shown in FIG. 13, a communication apparatus 1300 includes an obtaining module 1301 and a sending module 1302. For ease of description, FIG. 13 shows only main parts of the communication apparatus.

In some embodiments, the communication apparatus 1300 may be applied to the communication system shown in any one of FIG. 1 to FIG. 3 or FIG. 5, and perform the communication method shown in any one of FIG. 7 to FIG. 9A to FIG. 9C or FIG. 12.

The obtaining module 1301 is configured to obtain first information. The first information indicates a type of a data packet in a service stream.

The sending module 1302 is configured to send second information. The second information is determined based on the first information, and the second information indicates to add identification information to the data packet in the service stream, and the identification information indicates the type of the data packet in the service stream.

The second information includes the identification information.

In a possible design solution, the communication apparatus 1300 further includes a determining module 1303. The determining module 1303 is configured to determine the second information based on the first information.

The type of the data packet in the service stream includes one or more of the following: a foreground stream or a background stream; or the type of the data packet in the service stream includes one or more of the following: an I frame, a P frame, or a B frame; or the type of the data packet in the service stream includes one or more of the following: an enhancement layer or a base layer.

Optionally, the sending module 1302 is further configured to perform one or more of the following: sending the second information to an application server; or sending the second information to a terminal device.

Optionally, the obtaining module 1301 may include a receiving function and a parsing function. The receiving function may alternatively be separately set as a module, for example, a receiving module (not shown in FIG. 13). It should be understood that the receiving module and the sending module 1302 may alternatively be integrated into one module, for example, a transceiver module (not shown in FIG. 13). The transceiver module is configured to implement a transceiver function.

Further, the parsing function may be integrated with another processing function or module, for example, the determining module 1303, into one module, for example, a processing module (not shown in FIG. 13). The processing module is configured to implement another function other than the transceiver function.

Optionally, the communication apparatus 1300 may further include a storage module (not shown in FIG. 13), and the storage module stores a program or instructions. When the processing module executes the program or the instructions, the communication apparatus 1300 is enabled to perform the communication method shown in any one of FIG. 7 to FIG. 9A to FIG. 9C or FIG. 12.

Optionally, the communication apparatus 1300 may be a network device like an application function network element, or may be a chip (system) or another part or component that may be disposed in the network device, or may be an apparatus including the network device. This is not limited in this embodiment of this application.

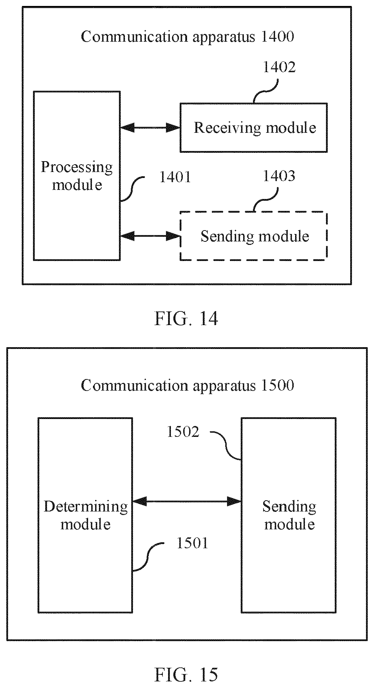

For example, FIG. 14 is a schematic diagram 2 of a structure of a communication apparatus according to an embodiment of this application. As shown in FIG. 14, a communication apparatus 1400 includes a processing module 1401 and a receiving module 1402. For ease of description, FIG. 14 shows only main parts of the communication apparatus.

In some embodiments, the communication apparatus 1400 may be applied to the communication system shown in any one of FIG. 1 to FIG. 3 or FIG. 5, and perform the communication method shown in any one of FIG. 7 to FIG. 9A to FIG. 9C or FIG. 12.

The receiving module 1402 is configured to receive second information from an application function network element. The second information is determined based on the first information, the first information indicates a type of a data packet in a service stream, the second information indicates to add identification information to the data packet in the service stream, and the identification information indicates the type of the data packet in the service stream.

The processing module 1401 is configured to add the identification information to the data packet in the service stream.

The second information includes the identification information.

The type of the data packet in the service stream includes one or more of the following: a foreground stream or a background stream. Alternatively, the type of the data packet in the service stream includes one or more of the following: an I frame, a P frame, or a B frame. Alternatively, the type of the data packet in the service stream includes one or more of the following: an enhancement layer or a base layer.

In a possible design solution, the communication apparatus 1400 may be a terminal device, and the communication apparatus 1400 may further include a sending module 1403. The sending module 1403 is configured to send network requirement information to the application function network element. The network requirement information is used to determine a network transmission capability required by a data packet of a first type in the data packet in the service stream, and the network transmission capability includes one or more of the following: a transmission bandwidth or a transmission delay.

Optionally, the receiving module 1402 and the sending module 1403 may alternatively be integrated into one module, for example, a transceiver module (not shown in FIG. 14). The transceiver module is configured to implement a transceiver function.

Optionally, the communication apparatus 1400 may further include a storage module (not shown in FIG. 14), and the storage module stores a program or instructions. When the processing module 1401 executes the program or the instructions, the communication apparatus 1400 is enabled to perform the communication method shown in any one of FIG. 7 to FIG. 9A to FIG. 9C.

Optionally, the communication apparatus 1400 may be a terminal device or an application server, or may be a chip (system) or another component or component that may be disposed in the terminal device or the application server, or may be an apparatus including the terminal device or the application server. This is not limited in this embodiment of this application.

For example, FIG. 15 is a schematic diagram 3 of a structure of a communication apparatus according to an embodiment of this application. As shown in FIG. 15, a communication apparatus 1500 includes a determining module 1501 and a sending module 1502. For ease of description, FIG. 15 shows only main parts of the communication apparatus 1500.

In some embodiments, the communication apparatus 1500 may be applied to the communication system shown in any one of FIG. 1 to FIG. 3 or FIG. 5, and perform the communication method shown in any one of FIG. 7 to FIG. 9A to FIG. 9C or FIG. 12.

The determining module 1501 is configured to determine first information. The first information indicates a type of a data packet in a service stream.

The sending module 1502 is configured to send the first information to an application function network element. The first information is used to determine second information, and the second information indicates to add identification information to the data packet in the service stream, and the identification information indicates the type of the data packet in the service stream.

The second information includes the identification information.

The type of the data packet in the service stream includes one or more of the following: a foreground stream or a background stream; or the type of the data packet in the service stream includes one or more of the following: an I frame, a P frame, or a B frame; or the type of the data packet in the service stream includes one or more of the following: an enhancement layer or a base layer.

Optionally, the communication apparatus 1500 may further include a receiving module (not shown in FIG. 15), and the receiving module is configured to implement a receiving function. Further, the receiving module and the sending module 1502 may alternatively be integrated into one module, for example, a transceiver module (not shown in FIG. 15). The transceiver module is configured to implement a transceiver function.

Optionally, the determining module 1501 and another module having a processing function may be integrated into one module, for example, a processing module (not shown in FIG. 15). The processing module may be configured to implement a function other than the transceiver function.

Optionally, the communication apparatus 1500 may further include a storage module (not shown in FIG. 15), and the storage module stores a program or instructions. When the processing module executes the program or the instructions, the communication apparatus 1500 is enabled to perform the communication method shown in any one of FIG. 7 to FIG. 9A to FIG. 9C.

Optionally, the communication apparatus 1500 may be a network device, for example, an application service provider, or may be a chip (system) or another part or component that may be disposed in the network device or the application server, or may be an apparatus including the network device. This is not limited in this embodiment of this application.

In addition, for technical effect of the communication apparatus shown in any one of FIG. 13 to FIG. 15, refer to technical effect of the communication method shown in any one of FIG. 7 to FIG. 9A to FIG. 9C or FIG. 12. Details are not described herein again.

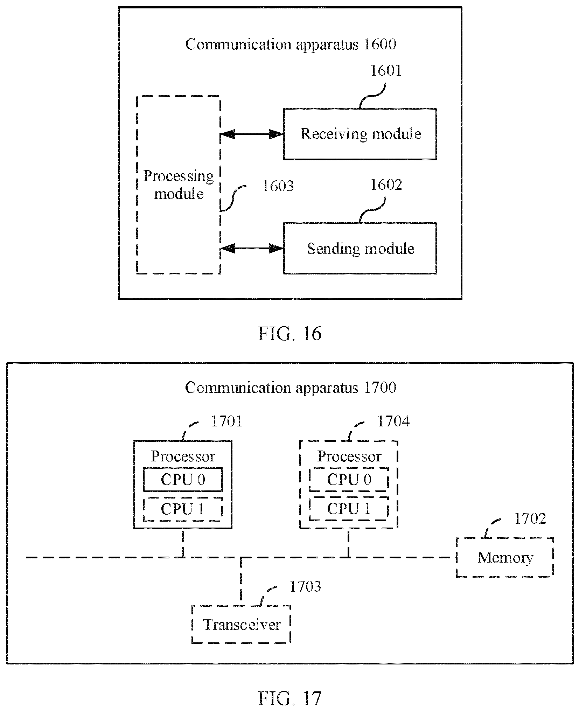

For example, FIG. 16 is a schematic diagram 4 of a structure of a communication apparatus according to an embodiment of this application. As shown in FIG. 16, a communication apparatus 1600 includes a receiving module 1601 and a sending module 1602. For ease of description, FIG. 16 shows only main parts of the communication apparatus 1600.

In some embodiments, the communication apparatus 1600 may be applied to the communication system shown in any one of FIG. 1 to FIG. 3 or FIG. 5, and perform the communication method shown in any one of FIG. 10, FIG. 11A to FIG. 11C, or FIG. 12.

The receiving module 1601 is configured to receive third information from an application service provider. The third information indicates to collect statistics on a traffic characteristic of a service stream.

The sending module 1602 is configured to send fourth information. The fourth information is determined based on the third information, and the fourth information includes one or more of the following: a service identifier of a service corresponding to the service stream, a data amount, a data transmission rate, a data transmission periodicity, a bit error rate, a transmission delay, or a reporting periodicity.

Optionally, the receiving module 1601 is further configured to receive a traffic characteristic statistics collection result of the service stream. The traffic characteristic statistics collection result is determined based on the fourth information.

The sending module 1602 is further configured to send the traffic characteristic statistics collection result to a policy control network element. The traffic characteristic statistics collection result is used to adjust a data transmission policy of the service stream.

For example, a second device includes one or more of the following: an application server or a terminal device.

Optionally, the receiving module 1601 and the sending module 1602 may alternatively be integrated into one module, for example, a transceiver module (not shown in FIG. 16). The transceiver module is configured to implement a transceiver function.

Optionally, the communication apparatus 1600 may further include a processing module 1603, and the processing module 1603 may be configured to implement a function other than the transceiver function.

Optionally, the communication apparatus 1600 may further include a storage module (not shown in FIG. 16), and the storage module stores a program or instructions. When the processing module 1603 executes the program or the instructions, the communication apparatus 1600 is enabled to perform the communication method shown in any one of FIG. 10 or FIG. 11A to FIG. 11C.

Optionally, the communication apparatus 1600 may be a network device like an application function network element, or may be a chip (system) or another part or component that may be disposed in the network device, or may be an apparatus or a system including the network device. This is not limited in this embodiment of this application.

In addition, for technical effect of the communication apparatus 1500, refer to technical effect of the communication method shown in any one of FIG. 10, FIG. 11A to FIG. 11C, or FIG. 12. Details are not described herein again.

For example, FIG. 17 is a schematic diagram 5 of a structure of a communication apparatus according to an embodiment of this application. The communication apparatus may be a terminal device or a network device, or may be a chip (system) or another part or component that may be disposed in the terminal device or the network device.

As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each part of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPU), may be an application specific integrated circuit (application specific integrated circuit, ASIC), or may be configured as one or more integrated circuits that implement embodiments of this application, for example, one or more microprocessors (digital signal processors, DSPs), or one or more field programmable gate arrays (field programmable gate arrays, FPGAs).

Optionally, the processor 1701 may perform various functions of the communication apparatus 1700 by running or executing a software program stored in the memory 1702 and invoking data stored in the memory 1702.

In specific implementation, in an embodiment, the processor 1701 may include one or more CPUs, such as a CPU 0 and a CPU 1 shown in FIG. 17.

In specific implementation, in an embodiment, the communication apparatus 1700 may alternatively include a plurality of processors, for example, the processor 1701 and a processor 1704 shown in FIG. 17. Each of the processors may be a single-CPU (single-CPU) processor or may be a multi-CPU (multi-CPU) processor. The processor herein may be one or more devices, circuits, and/or processing cores configured to process data (for example, computer program instructions).

The memory 1702 is configured to store a software program for executing the solutions of this application, and the processor 1701 controls execution. For a specific implementation, refer to the foregoing method embodiments. Details are not described herein again.

The memory 1702 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray optical disc, and the like), a magnetic disc storage medium or another magnetic storage device, or any other medium that can carry or store expected program code in a form of an instruction or a data structure and that can be accessed by a computer. However, the memory 1702 is not limited thereto. The memory 1702 may be integrated with the processor 1701, or may exist independently, and is coupled to the processor 1701 through an interface circuit (not shown in FIG. 17) of the communication apparatus 1700. This is not specifically limited in this embodiment of this application.

The transceiver 1703 is configured to communicate with another communication apparatus. For example, the communication apparatus 1700 is a terminal device, and the transceiver 1703 may be configured to communicate with a network device or communicate with another terminal device. For another example, the communication apparatus 1700 is a network device, and the transceiver 1703 may be configured to communicate with a terminal device or communicate with another network device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701, or may exist independently, and is coupled to the processor 1701 through an interface circuit (not shown in FIG. 17) of the communication apparatus 1700. This is not specifically limited in this embodiment of this application.

It should be noted that the structure of the communication apparatus 1700 shown in FIG. 17 does not constitute a limitation on the communication apparatus. An actual communication apparatus may include more or fewer parts than those shown in the figure, or combine some parts, or use a different part deployment.

In addition, for technical effect of the communication apparatus 1700, refer to the technical effect of the communication method in any one of the foregoing method embodiments. Details are not described herein again.

An embodiment of this application provides an application service system. The application service system includes an application service provider and an application function network element. The application service provider is configured to send first information to the application function network element. The first information indicates a type of a data packet in a service stream. The application function network element is configured to: receive the first information from the application service provider, and send second information. The second information is determined based on the first information, and the second information indicates to add identification information to the data packet in the service stream, and the identification information indicates the type of the data packet in the service stream.

Optionally, the application service system may further include an application server. The application server is configured to: provide content of a downlink service stream for a terminal device, or receive content of an uplink service stream from the terminal device.

An embodiment of this application further provides an application service system. The application service system includes an application function network element and an application server. The application function network element is configured to send second information to the application server. The second information is determined based on the first information, the first information indicates a type of a data packet in a service stream, the second information indicates to add identification information to the data packet in the service stream, and the identification information indicates the type of the data packet in the service stream. The application server is configured to: receive the second information from the application function network element, and add the identification information to the data packet in the service stream.

Optionally, the application service system may further include an application service provider. The application service provider is configured to inject content of a downlink service stream into the application server.

Further, the foregoing two application service systems may alternatively be a component of a larger communication system. The communication system may further include one or more terminal devices, and/or one or more core network elements, and/or one or more access network devices. This is not limited herein.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general purpose processor may be a microprocessor, or the processor may be any conventional processor or the like.

It may be understood that the memory in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. As an example rather than a limitation,, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When the software is used for implementation, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following" or a similar expression thereof refers to any combination of these items, including any combination of a single item or a plural item. For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.
device, and the communication apparatus 1400 may further include a sending module 1403. The sending module 1403 is configured to send network requirement information to the application function network element. The network requirement information is used to determine a network transmission capability required by a data packet of a first type in the data packet in the service stream, and the network transmission capability includes one or more of the following: a transmission bandwidth or a transmission delay.

Optionally, the receiving module 1402 and the sending module 1403 may alternatively be integrated into one module, for example, a transceiver module (not shown in FIG. 14). The transceiver module is configured to implement a transceiver function.

Optionally, the communication apparatus 1400 may further include a storage module (not shown in FIG. 14), and the storage module stores a program or instructions. When the processing module 1401 executes the program or the instructions, the communication apparatus 1400 is enabled to perform the communication method shown in any one of FIG. 7 to FIG. 9A to FIG. 9C.

Optionally, the communication apparatus 1400 may be a terminal device or an application server, or may be a chip (system) or another component or component that may be disposed in the terminal device or the application server, or may be an apparatus including the terminal device or the application server. This is not limited in this embodiment of this application.

For example, FIG. 15 is a schematic diagram 3 of a structure of a communication apparatus according to an embodiment of this application. As shown in FIG. 15, a communication apparatus 1500 includes a determining module 1501 and a sending module 1502. For ease of description, FIG. 15 shows only main parts of the communication apparatus 1500.

In some embodiments, the communication apparatus 1500 may be applied to the communication system shown in any one of FIG. 1 to FIG. 3 or FIG. 5, and perform the communication method shown in any one of FIG. 7 to FIG. 9A to FIG. 9C or FIG. 12.

The determining module 1501 is configured to determine first information. The first information indicates a type of a data packet in a service stream.

The sending module 1502 is configured to send the first information to an application function network element. The first information is used to determine second information, and the second information indicates to add identification information to the data packet in the service stream, and the identification information indicates the type of the data packet in the service stream.

The second information includes the identification information.

For example, the type of the data packet in the service stream includes one or more of the following: a foreground stream or a background stream; or the type of the data packet in the service stream includes one or more of the following: an I frame, a P frame, or a B frame; or the type of the data packet in the service stream includes one or more of the following: an enhancement layer or a base layer.

Optionally, the communication apparatus 1500 may further include a receiving module (not shown in FIG. 15), and the receiving module is configured to implement a receiving function. Further, the receiving module and the sending module 1502 may alternatively be integrated into one module, for example, a transceiver module (not shown in FIG. 15). The transceiver module is configured to implement a transceiver function.

Optionally, the determining module 1501 and another module having a processing function may be integrated into one module, for example, a processing module (not shown in FIG. 15). The processing module may be configured to implement a function other than the transceiver function.

Optionally, the communication apparatus 1500 may further include a storage module (not shown in FIG. 15), and the storage module stores a program or instructions. When the processing module executes the program or the instructions, the communication apparatus 1500 is enabled to perform the communication method shown in any one of FIG. 7 to FIG. 9A to FIG. 9C.

Optionally, the communication apparatus 1500 may be a network device, for example, an application service provider, or may be a chip (system) or another part or component that may be disposed in the network device or the application server, or may be an apparatus including the network device. This is not limited in this embodiment of this application.

In addition, for technical effect of the communication apparatus shown in any one of FIG. 13 to FIG. 15, refer to technical effect of the communication method shown in any one of FIG. 7 to FIG. 9A to FIG. 9C or FIG. 12. Details are not described herein again.

For example, FIG. 16 is a schematic diagram 4 of a structure of a communication apparatus according to an embodiment of this application. As shown in FIG. 16, a communication apparatus 1600 includes a receiving module 1601 and a sending module 1602. For ease of description, FIG. 16 shows only main parts of the communication apparatus 1600.

In some embodiments, the communication apparatus 1600 may be applied to the communication system shown in any one of FIG. 1 to FIG. 3 or FIG. 5, and perform the communication method shown in any one of FIG. 10, FIG. 11A to FIG. 11C, or FIG. 12.

The receiving module 1601 is configured to receive third information from an application service provider. The third information indicates to collect statistics on a traffic characteristic of a service stream.

The sending module 1602 is configured to send fourth information. The fourth information is determined based on the third information, and the fourth information includes one or more of the following: a service identifier of a service corresponding to the service stream, a data amount, a data transmission rate, a data transmission periodicity, a bit error rate, a transmission delay, or a reporting periodicity.

Optionally, the receiving module 1601 is further configured to receive a traffic characteristic statistics collection result of the service stream. The traffic characteristic statistics collection result is determined based on the fourth information.

The sending module 1602 is further configured to send the traffic characteristic statistics collection result to a policy control network element. The traffic characteristic statistics collection result is used to adjust a data transmission policy of the service stream.

For example, a second device includes one or more of the following: an application server or a terminal device.

Optionally, the receiving module 1601 and the sending module 1602 may alternatively be integrated into one module, for example, a transceiver module (not shown in FIG. 16). The transceiver module is configured to implement a transceiver function.

Optionally, the communication apparatus 1600 may further include a processing module 1603, and the processing module 1603 may be configured to implement a function other than the transceiver function.

Optionally, the communication apparatus 1600 may further include a storage module (not shown in FIG. 16), and the storage module stores a program or instructions. When the processing module 1603 executes the program or the instructions, the communication apparatus 1600 is enabled to perform the communication method shown in any one of FIG. 10 or FIG. 11A to FIG. 11C.

Optionally, the communication apparatus 1600 may be a network device like an application function network element, or may be a chip (system) or another part or component that may be disposed in the network device, or may be an apparatus or a system including the network device. This is not limited in this embodiment of this application.

In addition, for technical effect of the communication apparatus 1500, refer to technical effect of the communication method shown in any one of FIG. 10, FIG. 11A to FIG. 11C, or FIG. 12. Details are not described herein again.

For example, FIG. 17 is a schematic diagram 5 of a structure of a communication apparatus according to an embodiment of this application. The communication apparatus may be a terminal device or a network device, or may be a chip (system) or another part or component that may be disposed in the terminal device or the network device.

As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each part of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPU), may be an application specific integrated circuit (application specific integrated circuit, ASIC), or may be configured as one or more integrated circuits that implement embodiments of this application, for example, one or more microprocessors (digital signal processors, DSPs), or one or more field programmable gate arrays (field programmable gate arrays, FPGAs).

Optionally, the processor 1701 may perform various functions of the communication apparatus 1700 by running or executing a software program stored in the memory 1702 and invoking data stored in the memory 1702.

In specific implementation, in an embodiment, the processor 1701 may include one or more CPUs, such as a CPU 0 and a CPU 1 shown in FIG. 17.

In specific implementation, in an embodiment, the communication apparatus 1700 may alternatively include a plurality of processors, for example, the processor 1701 and a processor 1704 shown in FIG. 17. Each of the processors may be a single-CPU (single-CPU) processor or may be a multi-CPU (multi-CPU) processor. The processor herein may be one or more devices, circuits, and/or processing cores configured to process data (for example, computer program instructions).

The memory 1702 is configured to store a software program for executing the solutions of this application, and the processor 1701 controls execution. For a specific implementation, refer to the foregoing method embodiments. Details are not described herein again.

The memory 1702 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray optical disc, and the like), a magnetic disc storage medium or another magnetic storage device, or any other medium that can carry or store expected program code in a form of an instruction or a data structure and that can be accessed by a computer. However, the memory 1702 is not limited thereto. The memory 1702 may be integrated with the processor 1701, or may exist independently, and is coupled to the processor 1701 through an interface circuit (not shown in FIG. 17) of the communication apparatus 1700. This is not specifically limited in this embodiment of this application.

The transceiver 1703 is configured to communicate with another communication apparatus. For example, the communication apparatus 1700 is a terminal device, and the transceiver 1703 may be configured to communicate with a network device or communicate with another terminal device. For another example, the communication apparatus 1700 is a network device, and the transceiver 1703 may be configured to communicate with a terminal device or communicate with another network device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701, or may exist independently, and is coupled to the processor 1701 through an interface circuit (not shown in FIG. 17) of the communication apparatus 1700. This is not specifically limited in this embodiment of this application.

It should be noted that the structure of the communication apparatus 1700 shown in FIG. 17 does not constitute a limitation on the communication apparatus. An actual communication apparatus may include more or fewer parts than those shown in the figure, or combine some parts, or use a different part deployment.

In addition, for technical effect of the communication apparatus 1700, refer to the technical effect of the communication method in any one of the foregoing method embodiments. Details are not described herein again.

An embodiment of this application provides an application service system. The application service system includes an application service provider and an application function network element. The application service provider is configured to send first information to the application function network element. The first information indicates a type of a data packet in a service stream. The application function network element is configured to: receive the first information from the application service provider, and send second information. The second information is determined based on the first information, and the second information indicates to add identification information to the data packet in the service stream, and the identification information indicates the type of the data packet in the service stream.

Optionally, the application service system may further include an application server. The application server is configured to: provide content of a downlink service stream for a terminal device, or receive content of an uplink service stream from the terminal device.

An embodiment of this application further provides an application service system. The application service system includes an application function network element and an application server. The application function network element is configured to send second information to the application server. The second information is determined based on the first information, the first information indicates a type of a data packet in a service stream, the second information indicates to add identification information to the data packet in the service stream, and the identification information indicates the type of the data packet in the service stream. The application server is configured to: receive the second information from the application function network element, and add the identification information to the data packet in the service stream.

Optionally, the application service system may further include an application service provider. The application service provider is configured to inject content of a downlink service stream into the application server.

Further, the foregoing two application service systems may alternatively be a component of a larger communication system. The communication system may further include one or more terminal devices, and/or one or more core network elements, and/or one or more access network devices. This is not limited herein.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general purpose processor may be a microprocessor, or the processor may be any conventional processor or the like.

It may be understood that the memory in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. As an example rather than a limitation,, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When the software is used for implementation, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following" or a similar expression thereof refers to any combination of these items, including any combination of a single item or a plural item. For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to an application function network element, wherein the method comprises:
obtaining (S701) first information, wherein the first information indicates a type of a data packet in a service stream; and
sending (S703) second information to a source end device, wherein the second information is determined based on the first information, the second information indicates the source end device to add identification information to the data packet in the service stream, and the identification information indicates the type of the data packet in the service stream;
wherein:
the type of the data packet in the service stream comprises one or more of the following: a foreground stream or a background stream;
the type of the data packet in the service stream comprises one or more of the following: an I frame, a P frame, or a B frame; or
the type of the data packet in the service stream comprises one or more of the following: an enhancement layer or a base layer.

2. The communication method according to claim 1, wherein the second information comprises the identification information.

3. The communication method according to claim 1 or 2, further comprising:
determining (S702) the second information based on the first information.

4. The communication method according to any one of claims 1 to 3, wherein the sending (S703) second information comprises one or more of the following:
sending the second information to an application server; or
sending the second information to a terminal device.

5. A communication method, applied to a first device, wherein the method comprises:
receiving (S703) second information from an application function network element, wherein the second information is determined based on first information, the first information indicates a type of a data packet in a service stream, the second information indicates to add identification information to the data packet in the service stream, and the identification information indicates the type of the data packet in the service stream; and
adding (S704) the identification information to the data packet in the service stream;
wherein:
the type of the data packet in the service stream comprises one or more of the following: a foreground stream or a background stream;
the type of the data packet in the service stream comprises one or more of the following: an I frame, a P frame, or a B frame; or
the type of the data packet in the service stream comprises one or more of the following: an enhancement layer or a base layer.

6. The communication method according to claim 5, wherein the second information comprises the identification information.

7. The communication method according to claim 5 or claim 6, wherein the first device comprises a terminal device; and
the method further comprises:
sending (S705) network requirement information to the application function network element, wherein the network requirement information is used to determine a network transmission capability required by a data packet of a first type in the service stream, and the network transmission capability comprises one or more of the following: a transmission bandwidth or a transmission delay.

8. A communication apparatus (1700), comprising: a processor (1701), wherein the processor is coupled with a memory (1702); and
the processor is configured to execute a computer program stored in the memory, to enable the communication apparatus to perform the communication method according to any one of claims 1 to 7.

9. A computer-readable storage medium (1702), wherein the computer-readable storage medium comprises a computer program or instructions, and when the computer program or the instructions is/are run on a computer, the computer is enabled to perform the communication method according to any one of claims 1 to 7.

10. A computer program product, wherein the computer program product comprises a computer program or instructions, and when the computer program or the instructions is/are run on a computer (1700), the computer is enabled to perform the communication method according to any one of claims 1 to 7.

## Patentansprüche

1. Kommunikationsverfahren, das auf ein Anwendungsfunktionsnetzwerkelement angewendet wird, wobei das Verfahren Folgendes umfasst:
Erhalten (S701) von ersten Informationen, wobei die ersten Informationen eine Art eines Datenpakets in einem Dienststrom anzeigen; und
Senden (S703) von zweiten Informationen an ein Quellendgerät, wobei die zweiten Informationen basierend auf den ersten Informationen bestimmt werden, die zweiten Informationen dem Quellendgerät anzeigen, dem Datenpaket in dem Dienststrom Identifikationsinformationen hinzuzufügen und die Identifikationsinformationen die Art des Datenpakets in dem Dienststrom anzeigen;
wobei:
die Art des Datenpakets in dem Dienststrom eines oder mehrere der Folgenden umfasst: einen Vordergrundstrom oder einen Hintergrundstrom;
die Art des Datenpakets in dem Dienststrom eines oder mehrere der Folgenden umfasst: einen I-Frame, einen P-Frame oder einen B-Frame; oder
die Art des Datenpakets in dem Dienststrom eines oder mehrere der Folgenden umfasst: eine Erweiterungsschicht oder eine Grundschicht.

2. Kommunikationsverfahren nach Anspruch 1, wobei die zweiten Informationen die Identifikationsinformationen umfassen.

3. Kommunikationsverfahren nach Anspruch 1 oder 2, ferner Folgendes umfassend:
Bestimmen (S702) der zweiten Informationen basierend auf den ersten Informationen.

4. Kommunikationsverfahren nach einem der Ansprüche 1 bis 3, wobei das Senden (S703) der zweiten Informationen eines oder mehrere der Folgenden umfasst:
Senden der zweiten Informationen an einen Anwendungsserver; oder
Senden der zweiten Informationen an ein Endgerät.

5. Kommunikationsverfahren, das auf einem ersten Gerät angewendet wird, wobei das Verfahren Folgendes umfasst:
Empfangen (S703) von zweiten Informationen von einem Anwendungsfunktionsnetzwerkelement, wobei die zweiten Informationen basierend auf ersten Informationen bestimmt werden, die ersten Informationen eine Art eines Datenpakets in einem Dienststrom anzeigen, die zweiten Informationen anzeigen, dem Datenpaket in dem Dienststrom Identifikationsinformationen hinzuzufügen und die Identifikationsinformationen die Art des Datenpakets in dem Dienststrom anzeigen; und
Hinzufügen (S704) der Identifikationsinformationen zu dem Datenpaket in dem Dienststrom;
wobei:
die Art des Datenpakets in dem Dienststrom eines oder mehrere der Folgenden umfasst: einen Vordergrundstrom oder einen Hintergrundstrom;
die Art des Datenpakets in dem Dienststrom eines oder mehrere der Folgenden umfasst: ein I-Frame, ein P-Frame oder ein B-Frame; oder
die Art des Datenpakets in dem Dienststrom eines oder mehrere der Folgenden umfasst: eine Erweiterungsschicht oder eine Grundschicht.

6. Kommunikationsverfahren nach Anspruch 5, wobei die zweiten Informationen die Identifikationsinformationen umfassen.

7. Kommunikationsverfahren nach Anspruch 5 oder Anspruch 6, wobei das erste Gerät ein Endgerät umfasst; und
wobei das Verfahren ferner Folgendes umfasst:
Senden (S705) von Netzwerkanforderungsinformationen an das Anwendungsfunktionsnetzwerkelement, wobei die Netzwerkanforderungsinformationen verwendet werden, um eine Netzwerkübertragungsfähigkeit zu bestimmen, die von einem Datenpaket einer ersten Art in dem Dienststrom benötigt wird, und die Netzwerkübertragungsfähigkeit eines oder mehrere der Folgenden umfasst: eine Übertragungsbandbreite oder eine Übertragungsverzögerung.

8. Kommunikationsvorrichtung (1700), umfassend: einen Prozessor (1701), wobei der Prozessor mit einem Speicher (1702) gekoppelt ist; und
der Prozessor dazu konfiguriert ist, ein in dem Speicher gespeichertes Computerprogramm auszuführen, um die Kommunikationsvorrichtung in die Lage zu versetzten, das Kommunikationsverfahren nach einem der Ansprüche 1 bis 7 durchzuführen.

9. Computerlesbares Speichermedium (1702), wobei das computerlesbare Speichermedium ein Computerprogramm oder Anweisungen umfasst, und, wenn das Computerprogramm oder die Anweisungen auf einem Computer ausgeführt wird/werden, der Computer in die Lage versetzt wird, das Kommunikationsverfahren nach einem der Ansprüche 1 bis 7 durchzuführen.

10. Computerprogrammprodukt, wobei das Computerprogrammprodukt ein Computerprogramm oder Anweisungen umfasst, und wenn das Computerprogramm oder die Anweisungen auf einem Computer (1700) ausgeführt wird/werden, der Computer in die Lage versetzt wird, das Kommunikationsverfahren nach einem der Ansprüche 1 bis 7 durchzuführen.

## Revendications

1. Procédé de communication, appliqué à un élément de réseau de fonction d'application, dans lequel le procédé comprend :
l'obtention (S701) de premières informations, dans lequel premières informations indiquent un type d'un paquet de données dans un flux de service ; et
l'envoi (S703) de secondes informations à un dispositif final source, dans lequel les secondes informations sont déterminées sur la base des premières informations, les secondes informations indiquent au dispositif final source d'ajouter des informations d'identification au paquet de données dans le flux de service, et les informations d'identification indiquent le type du paquet de données dans le flux de service ;
dans lequel :
le type du paquet de données dans le flux de service comprend un ou plusieurs des éléments suivants : un flux de premier plan ou un flux d'arrière-plan ;
le type du paquet de données dans le flux de service comprend un ou plusieurs des éléments suivants : une trame I, une trame P ou une trame B ; ou
le type du paquet de données dans le flux de service comprend un ou plusieurs des éléments suivants : une couche d'amélioration ou une couche de base.

2. Procédé de communication selon la revendication 1, dans lequel les secondes informations comprennent les informations d'identification.

3. Procédé de communication selon la revendication 1 ou 2, comprenant en outre :
la détermination (S702) des secondes informations sur la base des premières informations.

4. Procédé de communication selon l'une quelconque des revendications 1 à 3, dans lequel l'envoi (S703) des secondes informations comprend un ou plusieurs des éléments suivants :
l'envoi des secondes informations à un serveur d'applications ; ou
l'envoi des secondes informations à dispositif terminal.

5. Procédé de communication, appliqué à un premier dispositif, dans lequel le procédé comprend :
la réception (S703) de secondes informations à partir d'un élément de réseau de fonction d'application, dans lequel les secondes informations sont déterminées sur la base de premières informations, les premières informations indiquent un type d'un paquet de données dans un flux de service, les secondes informations indiquent d'ajouter des informations d'identification au paquet de données dans le flux de service, et les informations d'identification indiquent le type du paquet de données dans le flux de service ; et
l'ajout (S704) des informations d'identification au paquet de données dans le flux de service ;
dans lequel :
le type du paquet de données dans le flux de service comprend un ou plusieurs des éléments suivants : un flux de premier plan ou un flux d'arrière-plan ;
le type du paquet de données dans le flux de service comprend un ou plusieurs des éléments suivants : une trame I, une trame P ou une trame B ; ou
le type du paquet de données dans le flux de service comprend un ou plusieurs des éléments suivants : une couche d'amélioration ou une couche de base.

6. Procédé de communication selon la revendication 5, dans lequel les secondes informations comprennent les informations d'identification.

7. Procédé de communication selon la revendication 5 ou la revendication 6, dans lequel le premier dispositif comprend un dispositif terminal ; et
le procédé comprend en outre :
l'envoi (S705) d'informations d'exigences réseau à l'élément réseau de fonction d'application, dans lequel les informations d'exigences réseau sont utilisées pour déterminer une capacité de transmission réseau requise par un paquet de données d'un premier type dans le flux de service, et la capacité de transmission réseau comprend un ou plusieurs des éléments suivants : une bande passante de transmission ou un délai de transmission.

8. Appareil de communication (1700), comprenant : un processeur (1701), dans lequel le processeur est couplé à une mémoire (1702) ; et
le processeur est configuré pour exécuter un programme informatique stocké dans la mémoire, pour permettre à l'appareil de communication de réaliser le procédé de communication selon l'une quelconque des revendications 1 à 7.

9. Support de stockage lisible par ordinateur (1702), dans lequel le support de stockage lisible par ordinateur comprend un programme informatique ou des instructions, et lorsque le programme informatique ou les instructions est/sont mis en œuvre sur un ordinateur, l'ordinateur est activé pour réaliser le procédé de communication selon l'une quelconque des revendications 1 à 7.

10. Produit programme informatique, dans lequel le produit programme informatique comprend un programme informatique ou des instructions, et lorsque le programme informatique ou les instructions est/sont exécutés sur un ordinateur (1700), l'ordinateur est activé pour réaliser le procédé de communication selon l'une quelconque des revendications 1 à 7.
